# EUROPEAN PATENT APPLICATION

(11) **EP 4 787 153 A1**
(43) Date of publication of application: **05.08.2026**
(21) Application number: 24869761.7
(22) Date of filing: 21.05.2024
(51) Int. Cl.: G06F 8/65

(54) **UPGRADING METHOD FOR OPTICAL MODULE AND RELATED APPARATUS**

(30) Priority: 28.09.2023 CN 202311290426
(71) Applicant: HUAWEI TECHNOLOGIES CO., LTD., Shenzhen 518129 (CN)
(72) Inventor: LIU, Kangli, Shenzhen, Guangdong 518129 (CN); ZHANG, Changjun, Shenzhen, Guangdong 518129 (CN); CHENG, Xiang, Shenzhen, Guangdong 518129 (CN); SU, Changzheng, Shenzhen, Guangdong 518129 (CN)
(74) Representative: Epping - Hermann - Fischer
(86) International application number: PCT/CN2024/094466
(87) International publication number: WO 2025/066195

(57) **Abstract**

This application provides an optical module upgrade method applied to an optical module. The optical module includes a module central processing unit and at least one functional unit supporting upgrade. The method includes: The module central processing unit receives an upgrade file, where the upgrade file includes at least one executable file and version information of the upgrade file, and the version information of the upgrade file is determined based on version information of the at least one executable file in the upgrade file. The module central processing unit parses the upgrade file, and determines a to-be-upgraded target unit in the optical module. When the target unit includes the module central processing unit, the module central processing unit runs an executable file that is in the at least one executable file and that corresponds to the module central processing unit. When the target unit includes the functional unit, the module central processing unit sends, to the target unit, an executable file that is in the at least one executable file and that corresponds to the target unit. This can simplify an upgrade procedure, improve upgrade efficiency, and implement normalized upgrade management.

## Description

This application claims priority to Chinese Patent Application No. 202311290426.0, filed with the China National Intellectual Property Administration on September 28, 2023 and entitled "OPTICAL MODULE UPGRADE METHOD AND RELATED APPARATUS", which is incorporated herein by reference in its entirety.

### TECHNICAL FIELD

This application relates to the field of software management technologies, and in particular, to an optical module upgrade method and apparatus, an optical module, a computer-readable storage medium, and a computer program product.

### BACKGROUND

With continuous development of optical communication technologies, an increasing quantity of vendors launch optical modules. The optical module is an optoelectronic device that implements electrical-to-optical conversion and optical-to-electrical conversion in optical communication, and usually includes various optical devices, functional circuits, and optical interfaces. The optical device further includes a transmit side and a receive side. In a data transmission process of optical communication, the transmit side in the optical module converts an electrical signal into an optical signal, and after the optical signal is transmitted through an optical fiber, the receive side converts the optical signal into the electrical signal. The optical module may be configured on a network device, for example, a swappable optical module may be configured on the network device, to form an optical network device.

In consideration of a security requirement or a function enhancement requirement, a computer program, such as firmware (firmware) or a component (component), may be further deployed in the optical module to perform security protection or function enhancement. With complication of the optical modules, firmware upgrade of the optical modules has become an indispensable function of the optical modules.

However, the optical module may include a plurality of units that can upgrade firmware, for example, a module central processing unit, a light source, an analog-to-digital converter, and a digital-to-analog converter. A network device side needs to identify a unit that is in the optical module and that corresponds to upgrade firmware, to send the upgrade firmware to the corresponding unit for upgrade. As a result, an upgrade procedure is complex, which affects upgrade efficiency.

### SUMMARY

This application provides an optical module upgrade method. According to the method, version information of an executable file in an upgrade file is mapped to version information of the upgrade file unique to a device side, and an optical module internally parses the version information of the upgrade file, to upgrade a corresponding unit in the optical module, which simplifies an upgrade procedure and improves upgrade efficiency. In addition, when delivering the upgrade file, the device side (for example, a network device) does not need to identify a unit that is in the optical module and that corresponds to each executable file, so that normalized management can be performed on optical modules. This application further provides an apparatus, an optical module, a computer-readable storage medium, and a computer program product that correspond to the foregoing method.

According to a first aspect, this application provides an optical module upgrade method. The method may be applied to an optical module. The optical module includes a module central processing unit (which may also be referred to as a module central processing unit) and at least one functional unit supporting upgrade. The functional unit may be a hardware unit that has or implements a corresponding function.

Specifically, the module central processing unit receives the upgrade file, where the upgrade file includes at least one executable file and version information of the upgrade file, and the version information of the upgrade file may be determined based on version information of the at least one executable file in the upgrade file. Then, the module central processing unit parses the upgrade file to determine a to-be-upgraded target unit in the optical module. The target unit includes at least one of the module central processing unit and the functional unit. When the target unit includes the module central processing unit, the module central processing unit runs an executable file that is in the at least one executable file and that corresponds to the module central processing unit. When the target unit includes the functional unit, the module central processing unit sends, to the target unit, an executable file that is in the at least one executable file and that corresponds to the target unit.

According to the method, the version information of the executable file in the upgrade file is mapped to the version information of the upgrade file unique to a device side, so that the device side performs normalized management on optical modules. When upgrading the optical module, the device side does not need to identify a unit that is in the optical module and that corresponds to each executable file, but performs unified upgrade on different units in the optical module based on the upgrade file, which simplifies an upgrade procedure and improves upgrade efficiency. When firmware upgrade needs to be performed on a plurality of units in the optical module, the upgrade procedure does not need to be triggered a plurality of times, which further improves upgrade efficiency.

In some possible implementations, the functional unit includes at least one of a digital signal processor, a light source, a serial circuit, a digital-to-analog converter, or an analog-to-digital converter. The method supports upgrade of any one or any combination of the module central processing unit, the digital signal processor, the light source, the serial circuit, the digital-to-analog converter, or the analog-to-digital converter in the optical module, and can meet a service requirement. In addition, when the plurality of units are upgraded, a network device side can trigger upgrade at a time, which improves upgrade efficiency.

In some possible implementations, the upgrade file includes a file header, and the file header includes the version information of the upgrade file. According to the method, the executable file is packaged into the upgrade file, and the version information of the upgrade file is recorded in the file header. In this way, the upgrade file can be presented as an upgrade file unique to a network device. The network device may implement normalized upgrade management based on the unique upgrade file.

In some possible implementations, the file header further includes the version information of the at least one executable file. The module central processing unit may further query version information of the target unit that completes upgrade. The module central processing unit compares the version information of the target unit that completes upgrade with version information that is of the executable file corresponding to the target unit and that is in the file header, to obtain an upgrade result. For example, if the version information of the target unit that completes upgrade is consistent with the version information that is of the executable file corresponding to the target unit and that is in the file header, it indicates that the upgrade succeeds. If version information of at least one unit that is in the target unit and that completes upgrade is inconsistent with the version information in the file header, it indicates that the upgrade fails.

According to the method, actual version information and expected version information of the target unit are compared after upgrade is completed, to check the upgrade result. In this way, an upgrade problem can be detected in a timely manner, to enable timely handling when the upgrade fails, reduce a risk, and ensure reliability. In addition, based on version information of a single executable file, accuracy of upgrading the single executable file may be checked. When a problem occurs during upgrade, the problem can be quickly located, to provide help for resolving the problem.

In some possible implementations, the upgrade file includes a configuration file. The configuration file includes the version information of the upgrade file. According to the method, the configuration file and the executable file are combined to form the upgrade file without a need for package. The configuration file and the executable file can be flexibly combined according to a requirement, to offer high availability.

In some possible implementations, the configuration file further includes an identifier and an upgrade sequence of the at least one executable file in the upgrade file. For executable files that have a dependency relationship, the upgrade sequence is specified in the configuration file. This ensures that corresponding target units can be upgraded in sequence, avoids an upgrade error, and improves upgrade efficiency.

In some possible implementations, the upgrade file further includes identification information, and the identification information indicates an optical module to which the upgrade file is adapted. For example, the identification information may be manufacturing information of the optical module to which the upgrade file is adapted. The module central processing unit may send manufacturing information of the optical module to the network device. Correspondingly, the network device may perform matching based on the manufacturing information of the optical module and the identification information of the executable file, to obtain the upgrade file that successfully matches the optical module. The module central processing unit may receive the upgrade file that is obtained by the network device based on the manufacturing information of the optical module and the identification information and that successfully matches the optical module.

According to the method, the network device may identify, according to a general identification rule, the optical module corresponding to the upgrade file, to implement automatic upgrade management of the optical module. Further, the network device may identify a supported upgrade version based on the upgrade file, to upgrade the optical module of a specified version.

In some possible implementations, the upgrade file further includes identification information. The identification information indicates an optical module to which the upgrade file is adapted. The module central processing unit may further receive the identification information that is of the upgrade file and that is sent by the network device. The module central processing unit matches manufacturing information of the optical module with the identification information of the upgrade file, and returns a matching result to the network device. The module central processing unit receives the upgrade file that is sent by the network device and that successfully matches the optical module.

According to the method, the optical module may identify, according to a general identification rule, the upgrade file corresponding to the optical module, and return an identification result to the network device, so that the network device sends the upgrade file to the optical module, to implement automatic upgrade management of the optical module.

In some possible implementations, the manufacturing information includes at least one of a manufacturer name, an organizationally unique identifier OUI, a serial number SN, a part number PN, or a module custom identifier. The manufacturing information may identify the optical module. Based on this, the upgrade file carries or indicates the manufacturing information of the adapted optical module, so that automatic matching between the optical module and the upgrade file can be implemented, and automatic upgrade management of the optical module can be implemented. In some possible implementations, the module central processing unit may further perform data packet-level check, file-level integrity check, and/or overall integrity check on the upgrade file to obtain a check result. For example, the module central processing unit may perform data packet-level check by using a hash value, to ensure correctness of a data packet. For another example, the module central processing unit may perform integrity check on a single executable file by using a checksum of the executable file, to ensure integrity, and the module central processing unit may perform integrity check on the entire upgrade file by using a checksum of the upgrade file, to ensure integrity of the entire upgrade file. When the check result indicates that the check succeeds, the module central processing unit performs the step of running the executable file that is in the at least one executable file and that corresponds to the module central processing unit; and/or when the check result indicates that the check succeeds, the module central processing unit may perform the step of sending, to the target unit, the executable file that is in the at least one executable file and that corresponds to the target unit.

According to the method, the upgrade file is checked at different granularities, which can ensure correctness and accuracy of the upgrade file, to ensure upgrade reliability. In addition, the method further supports determining validity of the upgrade file, to ensure correctness of the upgrade file run by the optical module, and ensure upgrade reliability. According to a second aspect, this application provides an optical module upgrade apparatus. The apparatus is configured to upgrade an optical module. The optical module includes a module central processing unit and at least one functional unit supporting upgrade. The apparatus includes:
a transceiver unit, configured to receive an upgrade file, where the upgrade file includes at least one executable file and version information of the upgrade file, and the version information of the upgrade file is determined based on version information of the at least one executable file in the upgrade file;
a parsing unit, configured to: parse the upgrade file, and determine a to-be-upgraded target unit in the optical module, where the target unit includes at least one of the module central processing unit and the functional unit; and
a running unit, configured to: when the target unit includes the module central processing unit, run an executable file that is in the at least one executable file and that corresponds to the module central processing unit. The transceiver unit is further configured to: when the target unit includes the functional unit, send, to the target unit, an executable file that is in the at least one executable file and that corresponds to the target unit.

In some possible implementations, the functional unit includes at least one of a digital signal processor, a light source, a serial circuit, a digital-to-analog converter, or an analog-to-digital converter.

In some possible implementations, the upgrade file includes a file header, and the file header includes the version information of the upgrade file.

In some possible implementations, the file header further includes the version information of the at least one executable file.

The apparatus further includes:
a result checking unit, configured to: query version information of the target unit that completes upgrade, and compare the version information of the target unit that completes upgrade with version information that is of the executable file corresponding to the target unit and that is in the file header, to obtain an upgrade result.

In some possible implementations, the upgrade file includes a configuration file, and the configuration file includes the version information of the upgrade file.

In some possible implementations, the configuration file further includes an identifier and an upgrade sequence of the at least one executable file in the upgrade file.

In some possible implementations, the upgrade file further includes identification information, and the identification information indicates an optical module to which the upgrade file is adapted.

The transceiver unit is further configured to:
send manufacturing information of the optical module to a network device.

The transceiver unit is specifically configured to:
receive the upgrade file that is obtained by the network device based on the manufacturing information of the optical module and the identification information and that successfully matches the optical module.

In some possible implementations, the upgrade file further includes identification information, and the identification information indicates an optical module to which the upgrade file is adapted.

The transceiver unit is further configured to receive the identification information that is of the upgrade file and that is sent by a network device.

The apparatus further includes:
a matching unit, configured to: match manufacturing information of the optical module with the identification information of the upgrade file, and return a matching result to the network device.

The transceiver unit is specifically configured to:
receive the upgrade file that is sent by the network device and that successfully matches the optical module.

In some possible implementations, the manufacturing information includes at least one of a manufacturer name, an organizationally unique identifier OUI, a serial number SN, a part number PN, or a module custom identifier.

In some possible implementations, the apparatus further includes:
a checking unit, configured to perform data packet-level check, file-level integrity check, and/or overall integrity check on the upgrade file to obtain a check result.

The running unit is configured to: when the check result indicates that the check succeeds, perform the step of running the executable file that is in the at least one executable file and that corresponds to the module central processing unit. The transceiver unit is configured to: when the check result indicates that the check succeeds, perform the step of sending, to the target unit, the executable file that is in the at least one executable file and that corresponds to the target unit.

According to a third aspect, this application provides an optical module. The optical module includes a module central processing unit, at least one functional unit supporting upgrade, and a module memory. The module central processing unit is configured to execute instructions stored in the module memory, so that the optical module performs the optical module upgrade method according to any one of the first aspect or the implementations of the first aspect. According to a fourth aspect, this application provides a computer-readable storage medium. The computer-readable storage medium stores instructions. The instructions instruct an optical module to perform the optical module upgrade method according to the first aspect or any one of the implementations of the first aspect.

According to a fifth aspect, this application provides a computer program product including instructions. When the computer program product is run on a compute device or a compute device cluster, the compute device or the compute device cluster is enabled to perform the optical module upgrade method according to the first aspect or any one of the implementations of the first aspect.

In this application, based on the implementations provided in the foregoing aspects, the implementations may be further combined to provide more implementations.

### BRIEF DESCRIPTION OF DRAWINGS

To describe the technical methods in embodiments of this application more clearly, the following briefly describes the accompanying drawings for describing embodiments.
FIG. 1 is a diagram of an architecture of an optical module upgrade system according to an embodiment of this application;
FIG. 2 is a schematic flowchart of firmware upgrade of an optical module configured in a network device according to an embodiment of this application;
FIG. 3 is a schematic flowchart of firmware upgrade of an optical module configured in a network device according to an embodiment of this application;
FIG. 4 is a flowchart of an optical module upgrade method according to an embodiment of this application;
FIG. 5 is a diagram of a format of an upgrade file according to an embodiment of this application;
FIG. 6 is a diagram of a format of another upgrade file according to an embodiment of this application;
FIG. 7 is a flowchart of an optical module upgrade method according to an embodiment of this application;
FIGS. 8A-8C are an interaction flowchart of an optical module upgrade method according to an embodiment of this application;
FIGS. 9A and 9B are an interaction flowchart of an optical module upgrade method according to an embodiment of this application;
FIGS. 10A and 10B are an interaction flowchart of an optical module upgrade method according to an embodiment of this application;
FIGS. 11A-11C are an interaction flowchart of an optical module upgrade method according to an embodiment of this application;
FIGS. 12A and 12B are an interaction flowchart of an optical module upgrade method according to an embodiment of this application;
FIGS. 13A and 13B are an interaction flowchart of an optical module upgrade method according to an embodiment of this application; and
FIG. 14 is a diagram of a structure of an optical module upgrade apparatus according to an embodiment of this application.

### DESCRIPTION OF EMBODIMENTS

The terms "first" and "second" in embodiments of this application are merely intended for description, and shall not be understood as an indication or implication of relative importance or an implicit indication of a quantity of indicated technical features. Therefore, a feature limited by "first" or "second" may explicitly or implicitly include one or more features.

First, some technical terms in embodiments of this application are described.

An executable file, also referred to as an executable file, is a file that can work on hardware (such as general-purpose hardware or specific hardware). The executable file usually includes instructions encoded in binary, and is also referred to as a binary file or an instruction file in some cases. Typical examples of the executable file include but are not limited to firmware (firmware), and a component (component).

The executable file may be executed on the optical module to implement a specific function, so as to meet a security requirement or a function enhancement requirement. The optical module may be hardware configured on a network device, and the module may be a swappable module or a non-swappable module. The network device is a parent device of the optical module, and may usually be a switch or a router. Further, the network device may be further classified as a network device having a board or a network device not having a board based on whether the network device includes a board. In the optical communication field, the board may include a wavelength division multiplexer board.

To implement optical-to-electrical conversion and electrical-to-optical conversion, the optical module usually includes various optical devices, functional circuits, and optical interfaces. Among various optical devices and functional circuits, there are a large quantity of units supporting firmware upgrade. When performing firmware upgrade on the optical module, the network device usually needs to identify a unit that is in the optical module and that corresponds to upgrade firmware, to send the upgrade firmware (for example, an executable file) to the corresponding unit. As a result, the upgrade procedure is complex, which affects upgrade efficiency. When firmware upgrade needs to be performed on a plurality of units in the optical module, upgrade procedures even need to be started separately, and units that are in the optical module and that correspond to upgrade firmware are identified a plurality of times, which further reduces upgrade efficiency.

In view of this, this application provides an optical module upgrade method. The method is applied to an optical module. The optical module includes a module central processing unit and at least one functional unit supporting upgrade. The module central processing unit may receive an upgrade file, where the upgrade file includes at least one executable file and version information of the upgrade file, and the version information of the upgrade file is determined based on version information of the at least one executable file in the upgrade file. The module central processing unit parses the upgrade file, and determines a to-be-upgraded target unit in the optical module, where the target unit includes at least one of the module central processing unit and the functional unit. When the target unit includes the module central processing unit, the module central processing unit runs an executable file that is in the at least one executable file and that corresponds to the module central processing unit. When the target unit includes the functional unit, the module central processing unit sends, to the target unit, an executable file that is in the at least one executable file and that corresponds to the target unit.

According to the method, the version information of the executable file in the upgrade file is mapped to the version information of the upgrade file unique to a device side, so that the device side performs normalized management on optical modules. When upgrading the optical module, the device side does not need to identify a unit that is in the optical module and that corresponds to each executable file, and the optical module internally parses the upgrade file to perform upgrade on the corresponding unit in the optical module, which simplifies an upgrade procedure and improves upgrade efficiency. When firmware upgrade needs to be performed on a plurality of units in the optical module, the upgrade procedure does not need to be triggered a plurality of times, which further improves upgrade efficiency.

To make the optical module upgrade method in this application clearer and easier to understand, a system architecture in this application is first described.

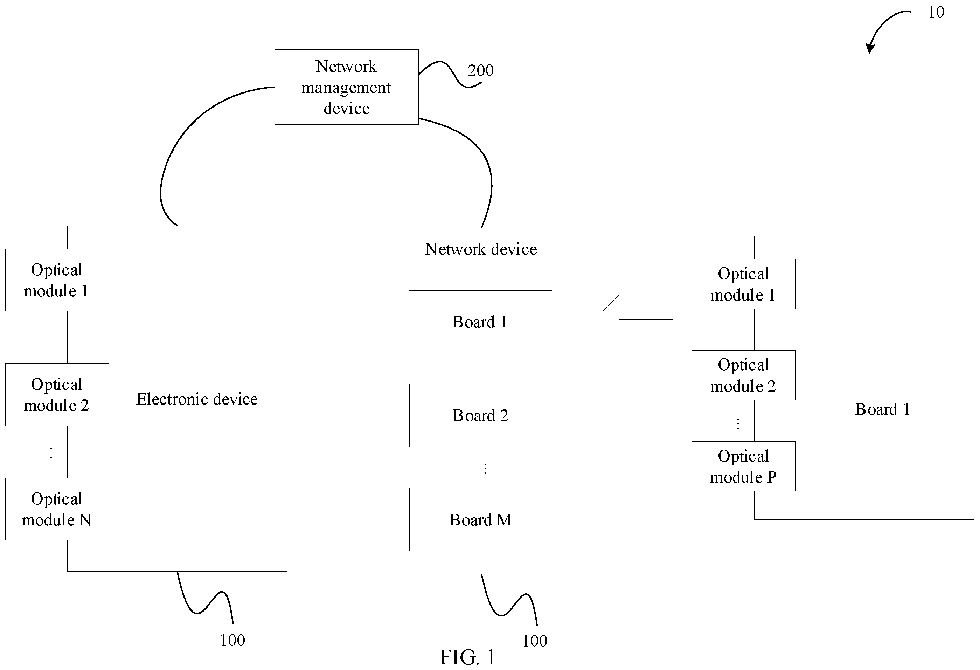

Refer to a diagram of an architecture of an optical module upgrade system shown in FIG. 1. The system 10 includes at least one network device 100 and a network management device 200. The network management device may be a terminal on which a network management application is deployed. One network management device may be configured to control a plurality of network devices.

The network device 100 may be classified as different types based on whether the network device 100 has a board. As shown in FIG. 1, the network device 100 may be directly configured with one or more optical modules (for example, an optical module 1, an optical module 2, ..., and an optical module N), or the network device 100 may be configured with one or more boards (for example, a board 1, a board 2, ..., and a board M). Each board may be configured with one or more optical modules (for example, the optical module 1 to an optical module P).

In the system 10, modules of different vendors and different versions may be configured for network devices 100 at a same site (for example, in a same equipment room or a same cabinet). The network management device 200 sends an upgrade file to the network device 100. The network device 100 may send the upgrade file to an optical module that matches the upgrade file (send, to the optical module, the upgrade file that matches the optical module), where the upgrade file includes at least one executable file and version information of the upgrade file. The version information of the upgrade file is determined based on version information of the at least one executable file in the upgrade file. Based on this, the module central processing unit in the optical module receives the upgrade file, and may parse the upgrade file to determine a to-be-upgraded target unit in the optical module, where the target unit includes at least one of the module central processing unit and a functional unit. When the target unit includes the module central processing unit, the module central processing unit runs an executable file that is in the at least one executable file and that corresponds to the module central processing unit. When the target unit includes the functional unit, the module central processing unit may send, to the target unit, an executable file that is in the at least one executable file and that corresponds to the target unit, so that the target unit runs the executable file that is in the at least one executable file and that corresponds to the target unit. In this way, the optical module internally identifies the upgrade file, to upgrade the target unit in the optical module. The network device 100 only needs to send the upgrade file to the corresponding optical module, and does not need to identify a unit that is in the optical module and that corresponds to the upgrade file. In this way, normalized management can be performed on the optical modules configured on the network device 100 through a unified upgrade procedure.

In addition, the upgrade file may further include identification information, and the identification information indicates an optical module to which the upgrade file is adapted. For example, the identification information may be manufacturing information of the optical module to which the upgrade file is adapted. The manufacturing information may also be referred to as vendor information. The manufacturing information may include at least one of a manufacturer name, an organizationally unique identifier (Organizationally unique identifier, OUI), a serial number (serial number, SN), a part number (Part Number, PN), or a module custom identifier. The module custom identifier may be a unique identifier defined by a vendor of the optical module. For example, the module custom identifier may be generated according to type code and a random number of the optical module.

The network device 100 may send, based on the identification information, the upgrade file to the successfully matched optical module. Specifically, the optical module may send manufacturing information of the optical module to the network device, and the network device 100 may match the manufacturing information of the optical module with the identification information of the executable file. When the matching succeeds, the upgrade file that successfully matches the optical module may be sent to the optical module, to implement automatic upgrade of the optical module. It should be noted that the network device 100 may alternatively send the identification information of the upgrade file to the optical module, and the optical module identifies whether the identification information of the upgrade file successfully matches the manufacturing information of the optical module, and returns a matching result to the network device 100. Then, the optical module may receive the successfully matched upgrade file returned by the network device 100, to implement automatic upgrade of the optical module.

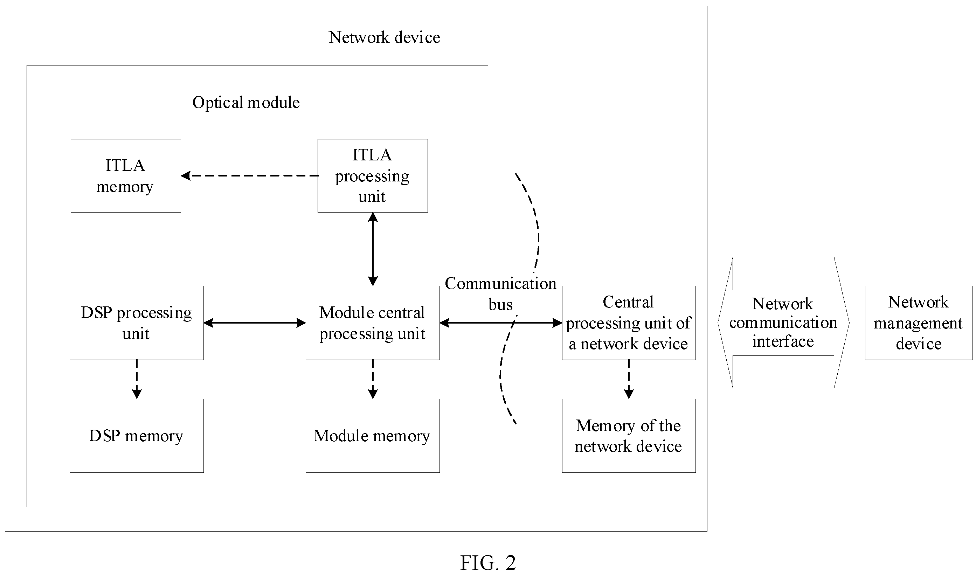

The following describes an example of upgrading an optical module. As shown in FIG. 2, a network management device transmits an upgrade file (which, for example, may be provided by a vendor of the optical module) to a memory on a network device side, and then a central processing unit of a network device transmits the upgrade file to one or more optical modules in the network device through a communication bus. In the example of FIG. 2, the optical module includes a module central processing unit, a digital signal processor (digital signal processor, DSP), and a tunable laser (Integrated Tunable Laser Assembly, ITLA). Usually, the module central processing unit, the DSP, and the ITLA all support an upgrade function. The foregoing unit (such as the module central processing unit or a functional unit such as the DSP or the ITLA) of the optical module usually includes two types: One type has a built-in power-off retention storage medium, and the other type needs to store data by using an external memory. This application may support upgrade of units of the two storage mechanisms.

A procedure of interaction between the network device and the optical module may be as follows: When the network device and the optical module communicate normally, the network device may send a query request to the optical module to query manufacturing information of the optical module. The network device may obtain the upgrade file whose identification information successfully matches the manufacturing information of the optical module. It should be noted that a matching process may be performed on the network device side, or may be performed on an optical module side. For example, the network device may obtain the manufacturing information of the optical module, and match the manufacturing information with the identification information of the upgrade file, to obtain the successfully matched upgrade file. For another example, the network device may send the identification information of the upgrade file to the optical module, and the optical module may match the manufacturing information of the optical module with the identification information of the upgrade file. When the matching succeeds, the network device sends the successfully matched upgrade file to the optical module. The optical module may start an upgrade procedure based on the upgrade file, and the network device may wait for the optical module to complete upgrade.

Further, the network device may obtain version information of the optical module (for example, a version number determined based on a version number of an executable file currently deployed in the optical module). When the version information of the optical module meets a specified condition, the network device may send the successfully matched executable file to the optical module. The specified condition may be set according to a service requirement. In some examples, the specified condition may be that the version information (for example, the version number of the optical module) of the optical module is inconsistent with version information of the upgrade file (for example, a version number of the upgrade file). In some other examples, the specified condition may be that the version information of the optical module is specified version information. The following describes an example. In the example, a user expects to upgrade a version A and a version B to a version D. The network device is configured with optical modules of the version A, the version B, and a version C. Based on this, the specified condition may be that the version information of the module is the version A or the version B.

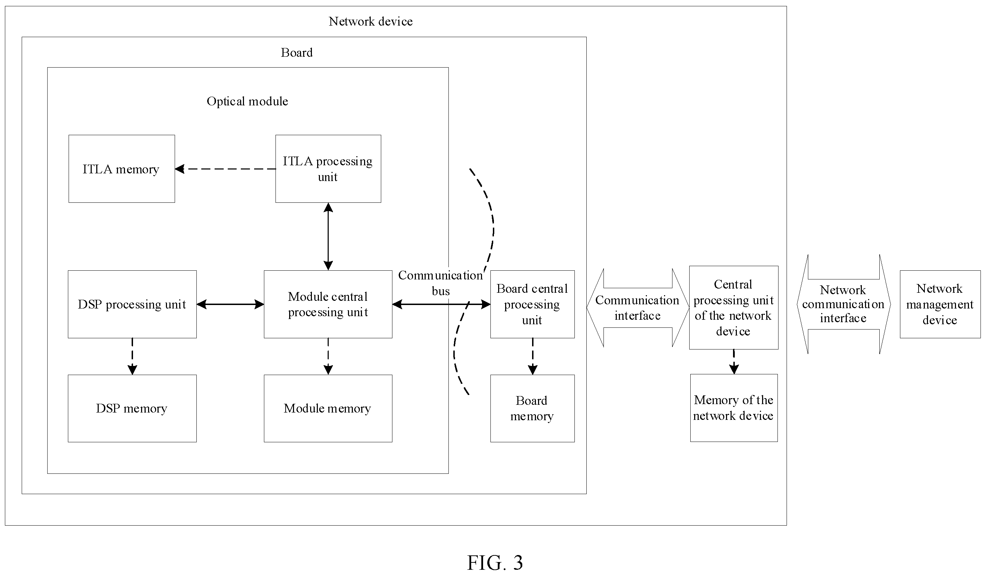

The solution of this application is also applicable to a scenario in which one network device has a plurality of boards, and one board has a plurality of optical modules. As shown in FIG. 3, the board includes a board central processing unit and a memory. The network management device transmits the upgrade file to the memory on the network device side. The board central processing unit may choose to obtain a required upgrade file from a central processing unit of the network management device after obtaining the manufacturing information of the optical module, or may choose to first store an upgrade file in the memory on the board side, and then identify a requirement to transmit the required upgrade file to the optical module.

Based on the foregoing optical module upgrade system 10, the following separately describes the optical module upgrade method in this application from perspectives of the optical module and the network device 100.

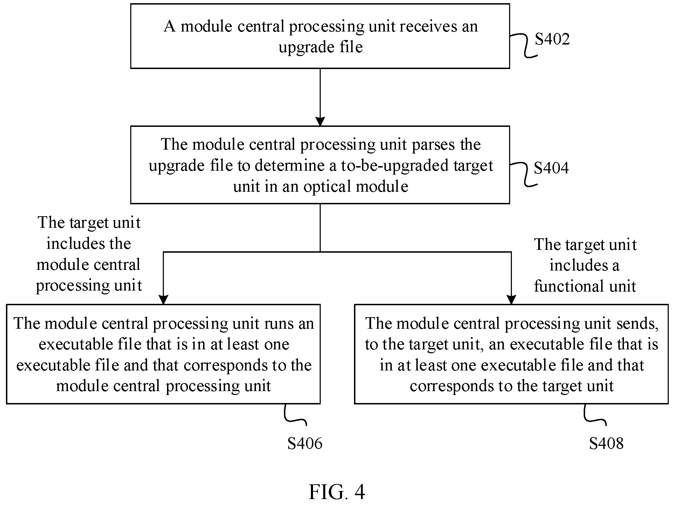

First, refer to a flowchart of an optical module upgrade method shown in FIG. 4. The method is applied to an optical module. The optical module includes a module central processing unit and at least one functional unit supporting upgrade. The functional unit includes but is not limited to at least one of a digital signal processor, a light source, a serial circuit, a digital-to-analog converter, or an analog-to-digital converter. The light source may be an ITLA. The method includes the following steps.

S402: The module central processing unit receives an upgrade file.

The upgrade file includes at least one executable file and version information of the upgrade file. The version information of the upgrade file may be a version number externally presented by the entire upgrade file. The version information of the upgrade file may usually be determined based on version information of the at least one executable file in the upgrade file. In this embodiment, the version information of the upgrade file may be obtained by mapping the version information of the at least one executable file in the upgrade file.

In an example, the version information of the upgrade file may be obtained by concatenating version information of executable files in the upgrade file. For example, an upgrade file of an optical module includes an executable file corresponding to a module central processing unit and an executable file corresponding to a DSP, where version information (for example, a version number) of the executable file corresponding to the module central processing unit is C101, and version information of the executable file corresponding to the DSP is D307. In this case, version information of the upgrade file of the optical module may be C101-D307. Version information of executable files corresponding to different units is combined into an externally presented unique version number, so that it can be ensured that the version information of the upgrade file of the optical module is unique from a perspective of a device side.

In some possible implementations, the at least one executable file in the upgrade file may be packaged, and correspondingly, the version information of the upgrade file may be written into a file header of a packaged file. In this way, the upgrade file can be presented as an upgrade file unique to a network device. Further, the file header may include the version information of the at least one executable file. For example, if the executable files include an executable file corresponding to the module central processing unit and an executable file corresponding to a DSP, the file header may further include version information of the module central processing unit and version information of the DSP. The version information of the executable file may be used to check, after upgrade is completed, whether the upgrade succeeds. For example, if it is found, after upgrade is completed, that version information of a corresponding unit is the same as the version information of the executable file in the file header, it indicates that the upgrade succeeds. Further, the file header of the upgrade file includes identification information of the upgrade file. The identification information indicates manufacturing information of an optical module to which the upgrade file is adapted. For example, the identification information may include at least one of a manufacturer name, an organizationally unique identifier OUI, a serial number SN, a part number PN, or a module custom identifier of the optical module to which the upgrade file is adapted. In this way, the upgrade file can be sent to the optical module that successfully matches the upgrade file.

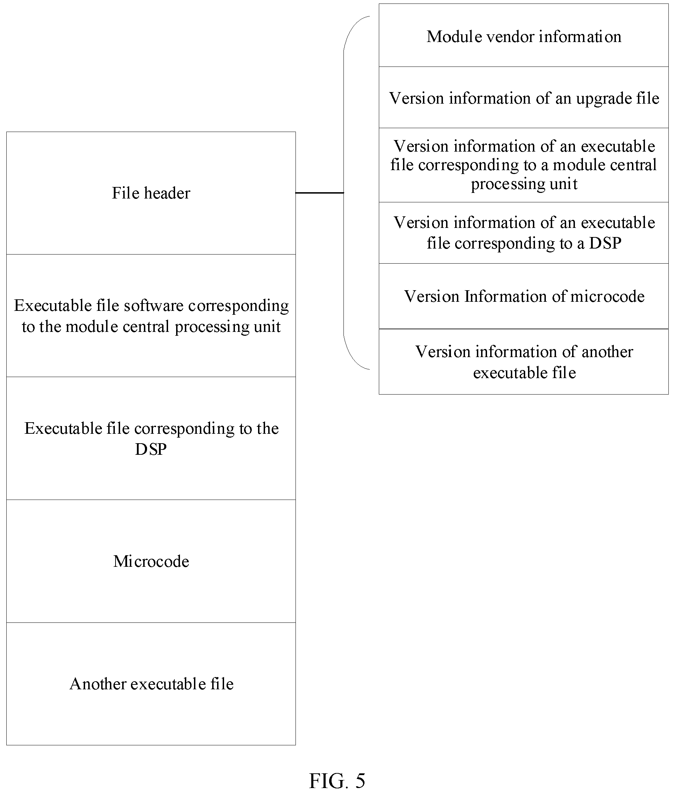

For ease of understanding, this application further provides an example of the upgrade file. Refer to a diagram of a format of an upgrade file shown in FIG. 5. In this example, the upgrade file includes an executable file corresponding to a module central processing unit, an executable file corresponding to a DSP, and microcode (which is a patch file run on the DSP and a type of an executable file). The foregoing executable files are packaged into one file. A file header of the packaged file includes version information of the upgrade file. Further, the file header of the packaged file includes version information of the executable files, for example, version information of the executable file corresponding to the module central processing unit, version information of the executable file corresponding to the DSP, and version information of the microcode (the patch file of the DSP). The file header of the packaged file further includes manufacturing information, namely, module vendor information, of an optical module to which the upgrade file is adapted.

It should be noted that the upgrade file may further include another executable file (other firmware), and correspondingly, the file header of the upgrade file may further include version information of the another executable file. In this embodiment, the file header may be combined with any one or more executable files, and an information sequence of the file header may be changed based on a specific design change.

In some other possible implementations, the at least one executable file in the upgrade file may be independent, and the version information of the upgrade file may be configured in a configuration file. The configuration file may also be referred to as an upgrade management configuration file. The configuration file and the executable file are independent of each other. The configuration file supports upgrade of a single executable file or combined upgrade of a plurality of executable files.

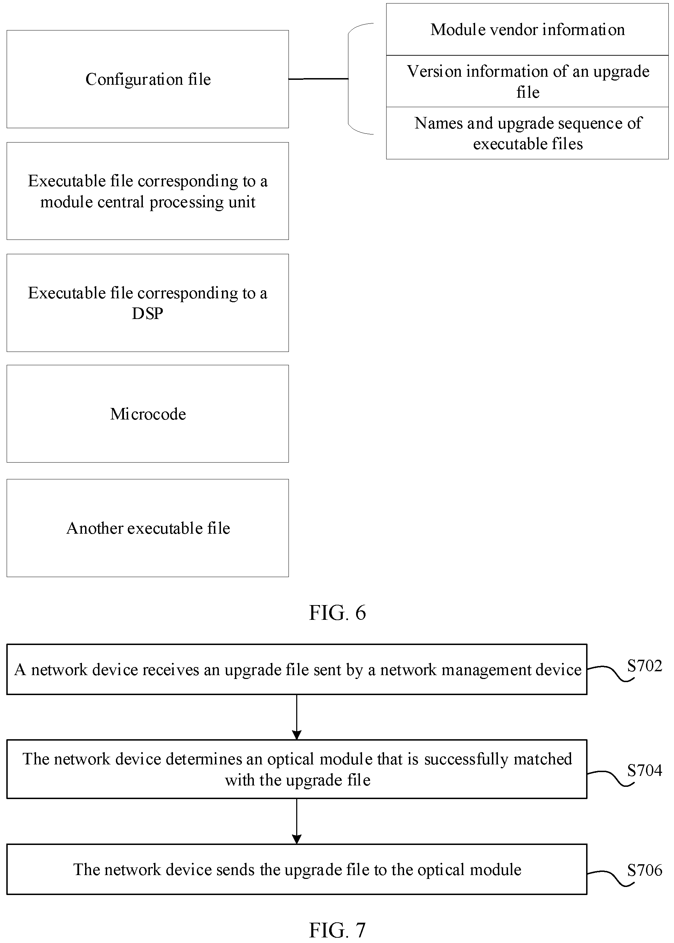

Further, the configuration file may include an identifier and an upgrade sequence of the at least one executable file included in the upgrade file. The identifier of the executable file may include but is not limited to a name of the executable file. In other words, the configuration file may further include a name and an upgrade sequence of an executable file corresponding to a to-be-upgraded unit in the optical module. The upgrade sequence may be configured by a user. When the user does not configure the upgrade sequence, the upgrade sequence may be a default sequence. For ease of understanding, this application further provides another example of the upgrade file. Refer to a diagram of a format of an upgrade file shown in FIG. 6. In this example, the upgrade file includes an executable file corresponding to a module central processing unit, an executable file corresponding to a DSP, microcode (which is a patch file run on the DSP and a type of an executable file), and a configuration file. Different from those in the upgrade file in FIG. 5, the executable files in the upgrade file in FIG. 6 are not packaged. Version information of the upgrade file, namely, unique version information of a combination of the executable files, is configured in the configuration file. The configuration file further includes names and an upgrade sequence of the to-be-upgraded executable files. In this way, deployment or upgrade of a single executable file or any combination of executable files can be supported, and a quantity and a sequence of files that need to be deployed or upgraded can be controlled through management of the configuration file.

Further, the configuration file may include identification information of the upgrade file. The identification information indicates manufacturing information of an optical module to which the upgrade file is adapted. For example, the identification information may include at least one of a manufacturer name, an organizationally unique identifier OUI, a serial number SN, a part number PN, or a module custom identifier of the optical module to which the upgrade file is adapted.

Because the network device may be configured with optical modules of different vendors and different versions, through matching between the identification information and the version information of the upgrade file and manufacturing information and version information of the optical module, upgrade files for different vendors and different solutions can be implemented. The device side offers a unified procedure, so that the network device can perform normalized management on optical modules. This can lower reliability risks caused by manual management, and reduce labor costs and time costs.

In this embodiment, the upgrade file received by the optical module is an upgrade file that successfully matches the optical module. A matching process may be performed on a network device side, or may be performed on an optical module side.

First, an example of matching the manufacturing information of the optical module with the identification information of the upgrade file is described.

In some possible implementations, the module central processing unit may send the manufacturing information of the optical module to the network device, and the network device may compare the manufacturing information of the optical module with the identification information of the upgrade file, to implement matching between the manufacturing information and the identification information. For example, if the manufacturing information of the optical module is consistent with the identification information of the upgrade file, it indicates that the matching succeeds. The module central processing unit may receive the upgrade file that is obtained by the network device based on the manufacturing information of the optical module and the identification information and that successfully matches the optical module.

In some other possible implementations, the module central processing unit may receive the identification information that is of the upgrade file and that is sent by the network device. The module central processing unit matches the manufacturing information of the optical module with the identification information of the upgrade file, and returns a matching result to the network device. The module central processing unit receives the upgrade file that is sent by the network device and that successfully matches the optical module.

Further, the optical module or the network device may match the version information of the optical module with the version information of the upgrade file. When the upgrade file is used to upgrade the optical module of a specified version, the optical module or the network device may further match the version information of the optical module (which is determined based on version information of a currently deployed executable file) with version information of the specified version in the version information of the upgrade file. Correspondingly, the upgrade file that successfully matches the optical module includes an upgrade file whose identification information and version information are successfully matched with the optical module.

For ease of understanding, the following provides descriptions with reference to an example. In this example, the upgrade file includes the executable file corresponding to the module central processing unit and the executable file corresponding to the DSP, where the version information of the executable file corresponding to the module central processing unit is C203, the version information of the executable file corresponding to the DSP is D317, and the upgrade file is used to upgrade an optical module whose version information includes C201-D310. In view of this, when the execution text currently deployed in the optical module includes an executable file whose version information is C201 and an executable file whose version information is D310, it may be determined that the version information of the upgrade module matches the version information of the optical module. It should be noted that, that the version information matching succeeds may further include that the version information of the executable file in the upgrade file is inconsistent with version information of the corresponding unit in the optical module. For example, in a scenario in which optical modules are all upgraded to a specific version, if the version information of the corresponding unit in the optical module is not the version information of the executable file, it indicates that the corresponding unit has not been successfully upgraded to the version, and the unit may be upgraded.

S404: The module central processing unit parses the upgrade file to determine a to-be-upgraded target unit in the optical module. When the target unit includes the module central processing unit, S406 is performed. When the target unit includes the functional unit, S408 is performed.

Specifically, the module central processing unit may parse the file header of the upgrade file or the configuration file of the upgrade file to obtain the version information of the upgrade file, and may determine the to-be-upgraded target unit in the optical module based on the version information of the upgrade file. The version information of the upgrade file may be obtained by mapping the executable file included in the upgrade file. In view of this, version information of each executable file may be obtained by performing inverse mapping on the version information of the upgrade file, to determine a unit corresponding to each executable file, where the unit corresponding to each executable file is the to-be-upgraded target unit in the optical module.

The following provides descriptions with reference to an example. In this example, the version information of the upgrade file is C203-D317. The module central processing unit parses the version information of the upgrade file to obtain the version information C203 and D317 of the executable files in the upgrade file, where C indicates a CPU, and D indicates a DSP. In view of this, it may be determined that the target unit includes the module central processing unit and the DSP.

When the target unit includes the module central processing unit, S406 may be performed to upgrade the module central processing unit. When the target unit includes the functional unit, S408 may be performed to upgrade the functional unit.

S406: The module central processing unit runs the executable file that is in the at least one executable file and that corresponds to the module central processing unit.

S408: The module central processing unit sends, to the target unit, an executable file that is in the at least one executable file and that corresponds to the target unit.

When the executable file is packaged into one upgrade file, if the target unit includes the module central processing unit, the module central processing unit may execute the entire upgrade file; or if the target unit includes the functional unit, the module central processing unit may send the entire upgrade file to the target unit.

When the executable files are all managed by using the configuration file, if the target unit includes the module central processing unit, the module central processing unit may execute the executable file corresponding to the module central processing unit; or if the target unit includes the functional unit, the module central processing unit may send, to the functional unit, an executable file corresponding to the functional unit, so that the functional unit runs the executable file.

Further, the module central processing unit may check the upgrade file. For example, the module central processing unit may perform data packet-level check, file-level integrity check, and overall integrity check on the upgrade file. Correspondingly, a check result may include at least one of a file-level integrity check result, an overall integrity check result, or a data packet-level check result (which may also be referred to as a range check result). Integrity check may be implemented by using a checksum (checksum). The checksum is a form of redundancy check, and is a simple method of checking, based on an error detection method, integrity of data transmitted across space (such as a communication link) or time (such as computer storage). A typical example of the checksum includes cyclic redundancy check (Cyclic redundancy check, CRC), a message-digest algorithm (Message-Digest Algorithm 5, MD5), or a secure hash algorithm (Secure Hash Algorithm, SHA). For example, the checksum may be a cumulative sum of values of transmitted bits. When transmission ends, a receiver may determine, based on the value, whether all data is received. If values match, it indicates that transmission is completed. Data packet-level check may be consistency check (accuracy check) on a data packet. During specific implementation, consistency check may be performed by comparing hash values. In addition, the network device may further implement self-check of the upgrade file based on the checksum, to ensure correctness and integrity of the upgrade file.

When the check result indicates that the check succeeds, the module central processing unit performs the step of running the executable file that is in the at least one executable file and that corresponds to the module central processing unit, and/or performing the step of sending, to the target unit, the executable file that is in the at least one executable file and that corresponds to the target unit.

In some possible implementations, the module central processing unit may further return the check result to the network device. The network device may send a run command to the module when the check result indicates that the check succeeds. The run command (for example, a RUN command) is used to run the upgrade file (the executable file in the upgrade file). In this way, a case in which the optical module is unavailable or the network device experiences repeated retries due to an error in a transmission process of the upgrade file can be reduced, which improves reliability and reduces a security risk caused by incomplete transmission or a transmission error of the upgrade file.

It is considered that the optical module may include different processors, different processors may use different instruction architectures, and consequently different running instructions are used by different processors to deploy or upgrade an executable file such as firmware. Therefore, the network device may further query an upgrade capability from the module, and receive the upgrade capability returned by the module, where the upgrade capability includes the run command used for upgrade. Correspondingly, the network device may send the corresponding run command when triggering deployment or upgrade of the executable file.

Further, the optical module may further receive a commit command (for example, a commit command) sent by the network device. The commit command is used to make the upgrade file persistent in the optical module, so that the optical module can continue to run the upgrade file after being reset. The optical module may mark a current running area (an area in which the executable file is currently run) as valid after receiving the commit command, to implement commit. When completing marking, the optical module may return commit success to the network device.

It is considered that the optical module may be faulty. Therefore, this application further supports copying the upgrade file, to facilitate subsequent fault recovery. The current running area and a backup area may be set for the optical module. The optical module implements deployment or upgrade in the current running area, and may also implement deployment or upgrade in the backup area. Specifically, the optical module may receive a copy command sent by the network device. The copy command is used to copy the upgrade file to the backup area of the optical module. In this way, when the optical module is faulty, the optical module may further obtain the upgrade file from the backup area, and run the upgrade file, to perform fault recovery.

Based on the foregoing content descriptions, according to the method, the version information of the executable file in the upgrade file is mapped to the version information of the upgrade file unique to the device side, so that the device side performs normalized management on optical modules. When upgrading the optical module configured on the device side, the device side does not need to identify the unit that is in the optical module and that corresponds to each executable file, and the optical module internally parses the upgrade file to perform unified upgrade on corresponding units in optical modules, which simplifies an upgrade procedure and improves upgrade efficiency. When firmware upgrade needs to be performed on a plurality of units in the optical module, the upgrade procedure does not need to be triggered a plurality of times, which further improves upgrade efficiency. In addition, the method supports identifying the optical module corresponding to the upgrade file based on the identification information of the upgrade file, for example, information that is configured in the file header or the configuration file and that indicates the optical module to which the upgrade file is adapted, and sending the upgrade file to the corresponding optical module, to implement automatic deployment or upgrade. According to the method, all the optical modules configured on the network device are automatically managed through the foregoing procedure, which greatly reduces management costs of deployment or upgrade of the optical module.

Then, refer to a flowchart of an optical module upgrade method shown in FIG. 7. The method is applied to a network device, and includes the following steps.

S702: The network device receives an upgrade file sent by a network management device.

The upgrade file includes at least one executable file and version information of the upgrade file. The version information of the upgrade file is determined based on version information of the at least one executable file in the upgrade file. Further, the upgrade file may include identification information, and the identification information indicates manufacturing information of an optical module to which the upgrade file is adapted.

The upgrade file may be in a plurality of formats. For example, the executable file in the upgrade file is packaged, and the version information of the upgrade file is recorded in a file header of a packaged file. For specific implementation, refer to related content descriptions in FIG. 5. For another example, all executable files in upgrade files may be managed by using a configuration file. For specific implementation, refer to related content descriptions in FIG. 6.

S704: The network device determines an optical module that successfully matches the upgrade file.

Matching between the upgrade file and the optical module may be performed on a network device side, or may be performed on an optical module side. The following separately describes the two cases.

When a matching process is performed on the network device side, the network device may obtain the identification information of the upgrade file, and obtain manufacturing information of the optical module from the optical module. The network device may send a query request to the optical module, where the query request is used to query the manufacturing information of the optical module. The optical module may query the manufacturing information of the module in response to the query request, and return attribute information of the optical module to the network device. During manufacturing of the optical module, a vendor may write information such as a vendor name, an OUI, an SN, a PN, or a module custom identifier into a memory, for example, a read-only memory (read-only memory, ROM), and provide a corresponding instruction or interface to read the foregoing information. In this way, the optical module may invoke the foregoing instruction or interface to query the manufacturing information of the optical module. Then, the network device compares the identification information of the upgrade file with the manufacturing information of the optical module. If the identification information is consistent with the manufacturing information, it indicates that the upgrade file successfully matches the optical module. Further, the network device may further compare version information, to determine the optical module that successfully matches the upgrade file. For example, the network device may obtain the version information of the upgrade file, where the version information includes a specified version. The network device may further obtain version information of the optical module. When the version information of the optical module successfully matches the specified version, it indicates that the upgrade file successfully matches the optical module.

When the matching process is performed on the optical module side, the network device may obtain the identification information of the upgrade file, and send the identification information of the upgrade file to the optical module. Then, the optical module may compare the identification information of the upgrade file with the manufacturing information of the optical module. If the identification information is consistent with the manufacturing information, it indicates that the upgrade file successfully matches the optical module. The optical module may return a matching result to the network device. Further, the optical module may further compare the version information, to determine the optical module that successfully matches the upgrade file. For example, the optical module may receive the version information that is of the upgrade file and that is sent by the network device, where the version information includes the specified version. The optical module further obtains the version information of the optical module. When the version information of the optical module successfully matches the specified version, it indicates that the upgrade file successfully matches the optical module.

S706: The network device sends the upgrade file to the optical module.

Specifically, the network device may send, based on the matching result, the upgrade file to the optical module that successfully matches the upgrade file. In other words, an upgrade file sent by the network device to each optical module is an upgrade file that successfully matches the optical module. For example, the network device sends, to each optical module, an upgrade file whose identification information is consistent with manufacturing information of the optical module. For another example, the network device sends, to each optical module, an upgrade file whose identification information is consistent with manufacturing information of the optical module and whose version information includes a specified version that is consistent with version information of the optical module.

According to the method, the version information of the executable file in the upgrade file is mapped to version information of an upgrade file unique to a device side, so that the network device performs normalized management on optical modules. When upgrading the optical module configured on the network device, the network device does not need to identify a unit that is in the optical module and that corresponds to each executable file, but performs unified upgrade on different units in the optical module based on the upgrade file, which simplifies an upgrade procedure and improves upgrade efficiency. When firmware upgrade needs to be performed on a plurality of units in the optical module, the upgrade procedure does not need to be triggered a plurality of times, which further improves upgrade efficiency. In addition, the method supports automatically identifying the optical module corresponding to the upgrade file based on the identification information of the upgrade file, and sending the upgrade file to the corresponding optical module, to implement automatic deployment or upgrade.

In consideration of the fact that the optical module may include a module central processing unit and at least one of a digital signal processor, a light source, a serial circuit, a digital-to-analog converter, or an analog-to-digital converter, the network device may upgrade a single upgradable unit or upgrade a combination of different upgradable units. The following separately describes examples of different upgrade scenarios.

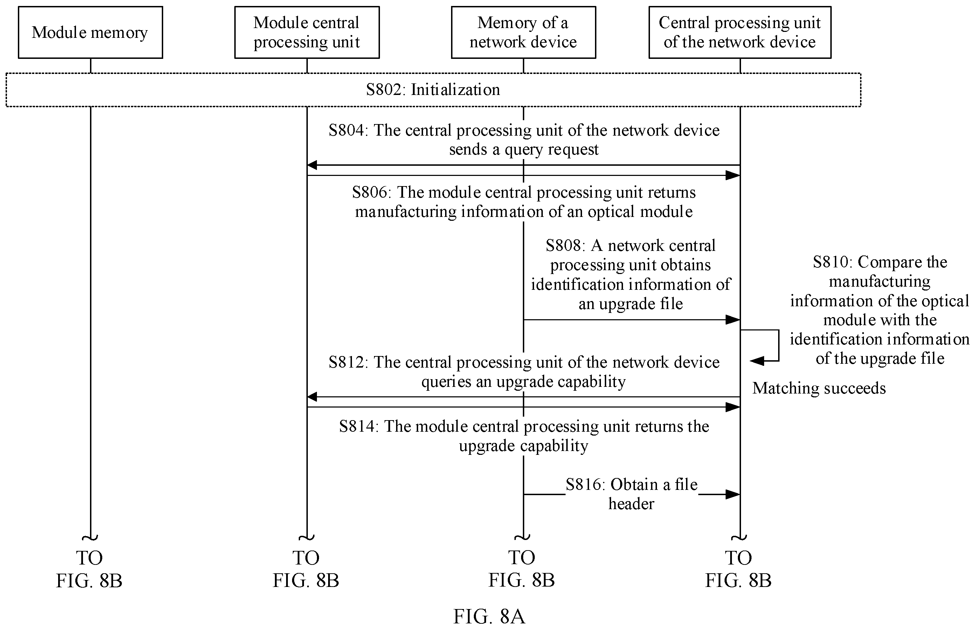

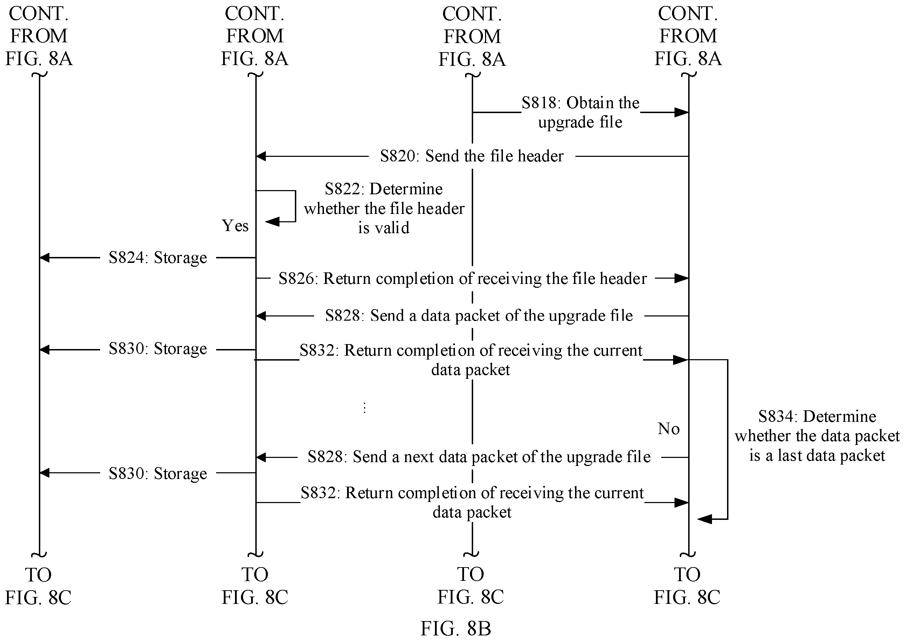

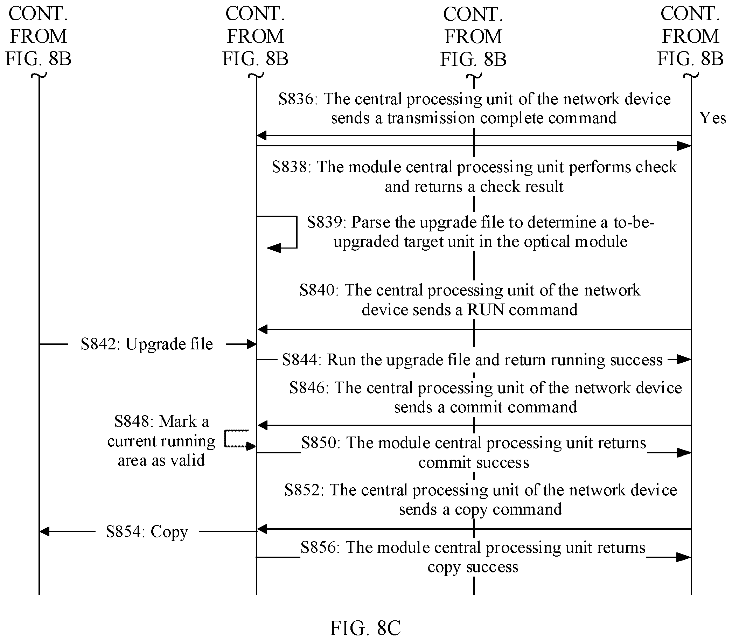

Refer to an interaction flowchart of an optical module upgrade method shown in FIGS. 8A-8C. A procedure of upgrading a module central processing unit in an optical module is as follows.

S802: Initialize a central processing unit of a network device, a memory of the network device, a module central processing unit, and a module memory.

Initialization may include but is not limited to power-on or power-on self-test (Power-On Self-Test, POST). Power-on self-test is also referred to as power-on self-test, and is a self-test logic executed during startup. After power-on or power-on self-test, a subsequent procedure may be performed.

S804: The central processing unit of the network device sends a query request to the module central processing unit. S806: The module central processing unit returns manufacturing information of the optical module to the central processing unit of the network device.

The query request is used to query the manufacturing information of the module, where the manufacturing information is also referred to as module authentication information. The module central processing unit may respond to the query request, invoke a corresponding interface or instruction to query and obtain the manufacturing information of the module, and return the manufacturing information to the central processing unit of the network device.

S808: The central processing unit of the network device obtains identification information of an upgrade file from the memory of the network device.

The identification information of the upgrade file indicates an optical module to which the upgrade file is adapted. Specifically, the identification information of the upgrade file may include manufacturing information of the optical module to which the upgrade file is adapted, which includes but is not limited to at least one of a manufacturer name (for example, a vendor name), an organizationally unique identifier, a serial number SN, a part number PN, or a module custom identifier of the optical module to which the upgrade file is adapted.

The network management device may send the identification information of the upgrade file to the network device, and the central processing unit of the network device may store the identification information in the memory of the network device for subsequent use.

S810: The central processing unit of the network device compares the manufacturing information of the optical module with the identification information of the upgrade file. When the manufacturing information of the optical module successfully matches the identification information of the upgrade file, S812 is performed.

S812: The central processing unit of the network device queries an upgrade capability from the module central processing unit.

S814: The module central processing unit returns the upgrade capability to the central processing unit of the network device.

When the upgrade capability indicates that the central processing unit supports upgrade, the upgrade capability includes a running instruction (also referred to as a RUN command) used for upgrade.

S816: The central processing unit of the network device obtains a file header.

S818: The central processing unit of the network device obtains the upgrade file.

S820: The central processing unit of the network device sends the file header to the module central processing unit. The central processing unit of the network device sends the file header to the module central processing unit to start upgrade.

S822: The module central processing unit determines whether the file header is valid. If the file header is valid, S824 is performed.

S824: The module central processing unit stores the file header in the module memory.

S826: The module central processing unit returns, to the central processing unit of the network device, completion of receiving the file header.

S828: The central processing unit of the network device sends a data packet of the upgrade file to the module central processing unit.

S830: The module central processing unit stores the received data packet in the module memory.

S832: The module central processing unit returns, to the central processing unit of the network device, completion of receiving the current data packet.

S834: The central processing unit of the network device determines whether the data packet is a last data packet of the upgrade file. If the data packet is not the last data packet of the upgrade file, the central processing unit of the network device proceeds to a next data packet of the upgrade file, and continues to perform S828. If the data packet is the last data packet of the upgrade file, the central processing unit of the network device performs S836.

S836: The central processing unit of the network device sends a transmission complete command.

S838: The module central processing unit checks an executable file to obtain a check result, and returns the check result to the central processing unit of the network device. When the check result indicates that the check succeeds, S839 and S840 are performed.

S839: The module central processing unit parses the upgrade file to determine a to-be-upgraded target unit in the optical module. When the target unit is the module central processing unit, S842 is performed.

In this embodiment, the upgrade file is used to upgrade the module central processing unit. The module central processing unit may determine, by parsing version information of the upgrade file, that the target unit is the module central processing unit. Therefore, S842 may be performed.

S840: The central processing unit of the network device sends the RUN command to the module central processing unit.

S842: The module central processing unit obtains the checked upgrade file from the module memory.

S844: After successfully running the upgrade file, the module central processing unit returns running success.

The module central processing unit may run the checked upgrade file by using a RUN command in an instruction set architecture supported by the module central processing unit, to implement upgrade of the module central processing unit.

S846: The central processing unit of the network device sends a commit command.

The commit command may be a commit command, and is used to commit the executable file.

S848: The module central processing unit marks a current running area as valid.

S850: The module central processing unit returns commit success.

S852: The central processing unit of the network device sends a copy command.

The copy command is used to copy the upgrade file (for example, an upgrade file of a new version) to a backup area. S854: The module central processing unit copies the upgrade file to the backup area of the module memory.

S856: The module central processing unit returns copy success.

It should be noted that S802, S804, S812 to S826, S832 to S838, and S840 to S856 are optional steps in this embodiment of this application. The optical module upgrade method in this application may alternatively be performed without performing S802, S804, S812 to S826, S832 to S838, and S840 to S856.

FIGS. 8A-8C show an example of separately upgrading the module central processing unit. The following shows an example of separately upgrading another functional unit (for example, a DSP) in the optical module.

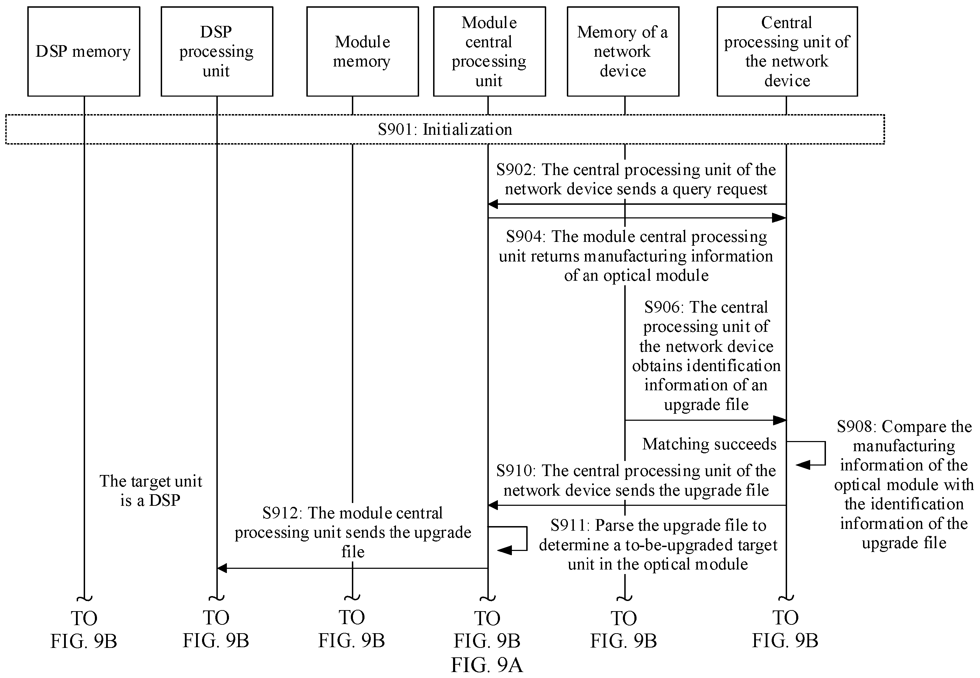

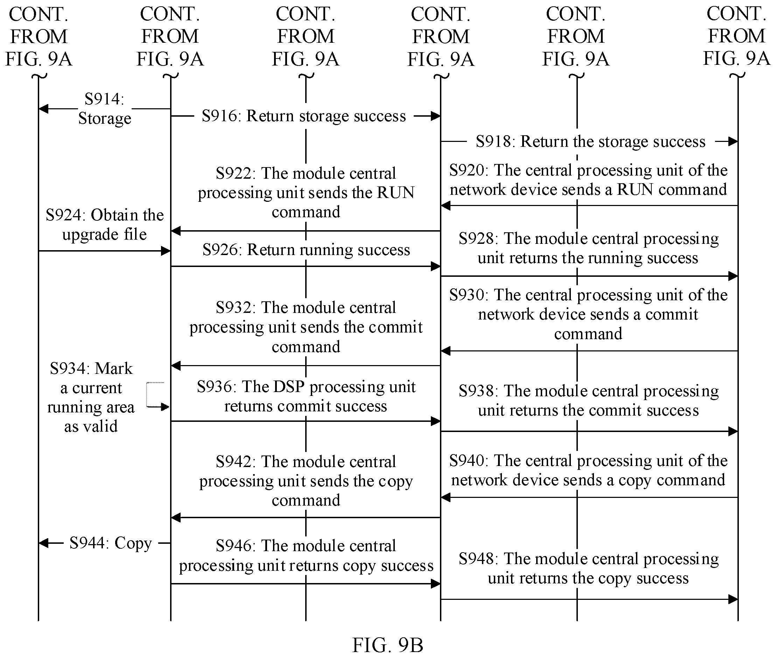

Refer to an interaction flowchart of an optical module upgrade method shown in FIGS. 9A and 9B. In this example, a DSP includes a DSP processing unit and a DSP memory. A procedure of upgrading the DSP in an optical module is as follows.

S901: Initialize a central processing unit of a network device, a memory of the network device, a module central processing unit, a module memory, a DSP processing unit, and a DSP memory.

S902: The central processing unit of the network device sends a query request to the module central processing unit. S904: The module central processing unit returns manufacturing information of the optical module to the central processing unit of the network device.

S906: The central processing unit of the network device obtains identification information of an upgrade file from the memory of the network device.

S908: The central processing unit of the network device compares the manufacturing information of the module with the identification information of the upgrade file. When the manufacturing information of the module successfully matches the identification information of the upgrade file, S910 is performed.

S910: The central processing unit of the network device sends the upgrade file to the module central processing unit. The central processing unit of the network device may send the upgrade file to start upgrade.

S911: The module central processing unit parses the upgrade file to determine a to-be-upgraded target unit in the optical module. When the target unit includes the DSP, S912 is performed.

Specifically, the module central processing unit parses the upgrade file to obtain version information of the upgrade file, and performs inverse mapping based on the version information of the upgrade file to obtain version information of an executable file in the upgrade file. In this example, the module central processing unit parses the upgrade file to obtain version information of the DSP. Therefore, it may be determined that the target unit is the DSP.

S912: The module central processing unit sends the upgrade file to the DSP processing unit.

S914: The DSP processing unit stores the upgrade file in the DSP memory.

S916: The DSP processing unit returns storage success to the module central processing unit.

S918: The module central processing unit returns the storage success to the central processing unit of the network device.

S920: The central processing unit of the network device sends a RUN command to the module central processing unit. S922: The module central processing unit sends the RUN command to the DSP processing unit.

S924: The DSP processing unit obtains the checked upgrade file from the DSP memory.

S926: After successfully running the upgrade file, the DSP processing unit returns running success to the module central processing unit.

S928: The module central processing unit returns the running success to the central processing unit of the network device.

S930: The central processing unit of the network device sends a commit command to commit the upgrade file. S932: The module central processing unit sends the commit command to the DSP processing unit.

S934: The DSP processing unit marks a current running area as valid.

S936: The DSP processing unit returns commit success to the module central processing unit.

S938: The module central processing unit returns the commit success to the central processing unit of the network device.

S940: The central processing unit of the network device sends a copy command.

S942: The module central processing unit sends the copy command to the DSP processing unit.

S944: The DSP processing unit copies the upgrade file to a backup area of the DSP memory.

S946: The DSP processing unit returns copy success to the module central processing unit.

S948: The module central processing unit returns the copy success to the central processing unit of the network device.

FIGS. 9A and 9B describe an example in which the network device is not configured with a board, and the central processing unit of the network device directly interacts with the module central processing unit. When the network device is alternatively configured with a board, the board may choose to directly and transparently transmit the command of the network device to the optical module, and act as an intermediate forwarder to complete the entire upgrade procedure; or may save the upgrade file sent by the network device, and then act as an initiator of the upgrade procedure to complete the entire upgrade interaction.

It should be noted that, for specific implementation of several steps in the embodiment in FIGS. 9A and 9B, refer to related content descriptions in the foregoing embodiments. Details are not described herein again. In addition, some steps in the embodiment in FIGS. 9A and 9B are optional steps. The optical module upgrade method in this embodiment of this application may alternatively be performed without performing the optional steps.

In consideration of the fact that some processors in the module do not have a dedicated memory (for example, the DSP may not have a storage medium), the module central processing unit may complete upgrade interaction through communication control with the DSP (specifically, the DSP processing unit).

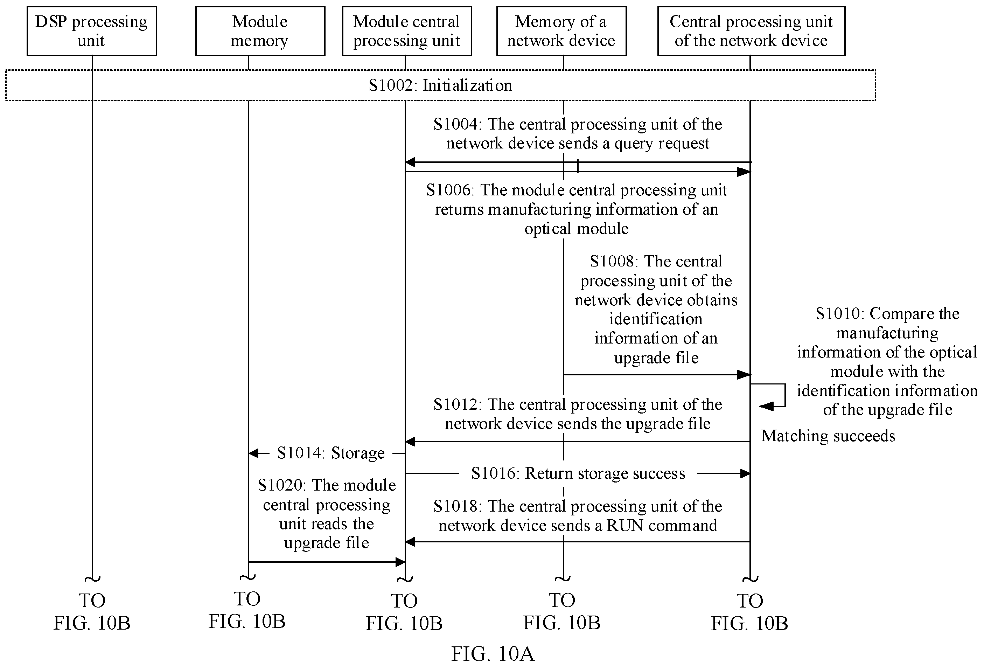

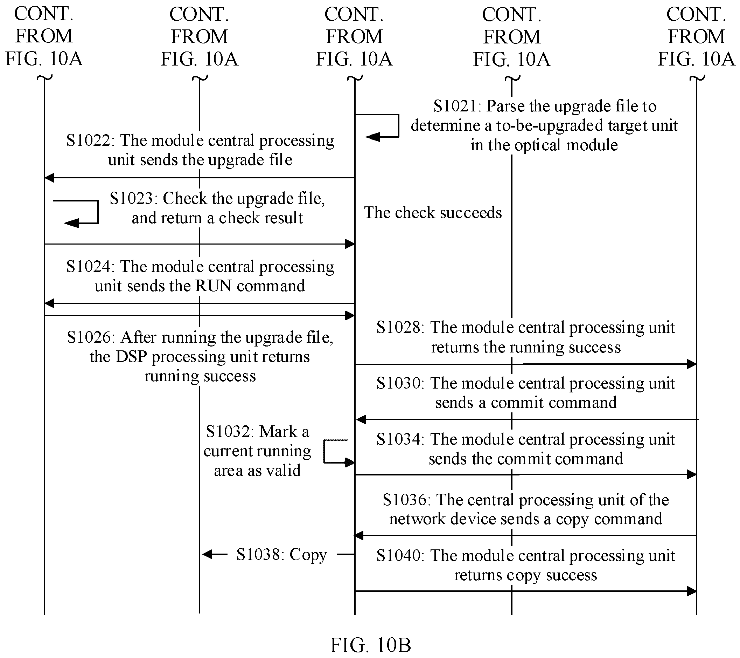

Refer to an interaction flowchart of another optical module upgrade method shown in FIGS. 10A and 10B. A procedure of performing firmware upgrade on a DSP in an optical module is as follows.

S1002: Initialize a central processing unit of a network device, a memory of the network device, a module central processing unit, and a module memory.

S1004: The central processing unit of the network device sends a query request to the module central processing unit.

S1006: The module central processing unit returns manufacturing information of the optical module to the central processing unit of the network device.

S1008: The central processing unit of the network device obtains identification information of an upgrade file from the memory of the network device.

S1010: The central processing unit of the network device compares the manufacturing information of the module with the identification information of the upgrade file. When the manufacturing information of the module successfully matches the identification information of the upgrade file, S1012 is performed.

S1012: The central processing unit of the network device sends the upgrade file to the module central processing unit.

The central processing unit of the network device may send the upgrade file to start upgrade.

S1014: The module central processing unit stores the upgrade file in the module memory.

S1016: The module central processing unit returns storage success to the central processing unit of the network device.

S1018: The central processing unit of the network device sends a RUN command to the module central processing unit.

S1020: The module central processing unit reads the upgrade file from the module memory.

S1021: The module central processing unit parses the upgrade file to determine a to-be-upgraded target unit in the optical module. When the target unit is the DSP, S1022 is performed.

S1022: The module central processing unit sends the upgrade file to a DSP processing unit.

S1023: The DSP processing unit checks the upgrade file, and returns a check result. When the check succeeds, S1024 is performed.

S1024: The module central processing unit sends the RUN command to the DSP processing unit.

S1026: After successfully running the upgrade file, the DSP processing unit returns running success to the module central processing unit.

S1028: The module central processing unit returns the running success to the central processing unit of the network device.

S1030: The central processing unit of the network device sends a commit command to commit the upgrade file.

S1032: The module central processing unit marks a current running area as valid.

S1034: The module central processing unit returns commit success to the central processing unit of the network device.

S1036: The central processing unit of the network device sends a copy command.

S1038: The module central processing unit copies the upgrade file to a backup area of the module memory.

S1040: The module central processing unit returns copy success to the central processing unit of the network device.

FIG. 8A to FIG. 10B describe examples of upgrading an executable file of a single unit, and the following describes an example of upgrading a combination of executable files of a plurality of units (for example, upgrade firmware includes a plurality of files).

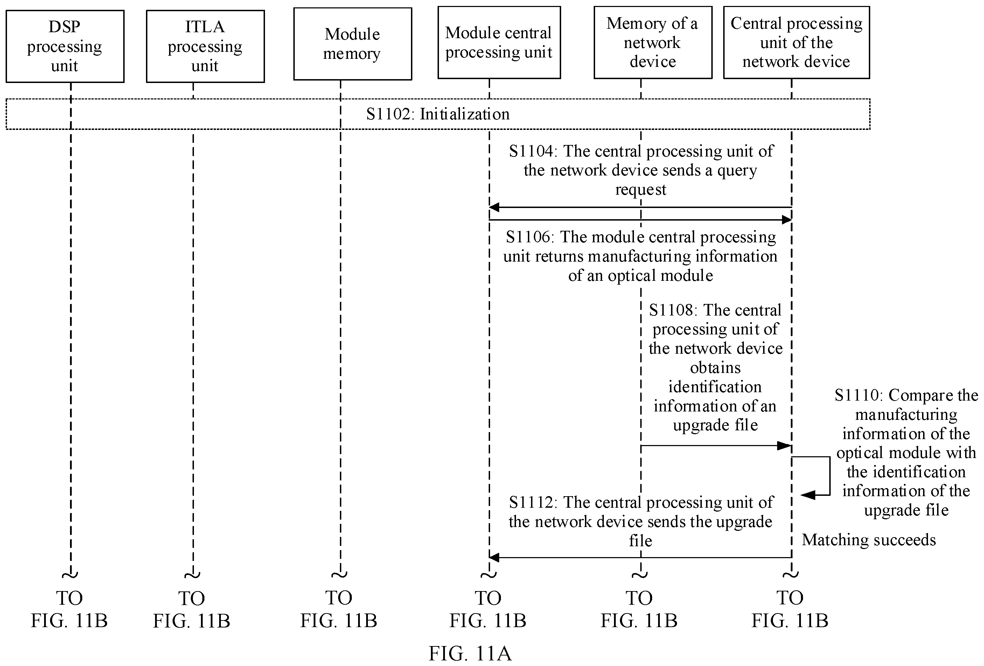

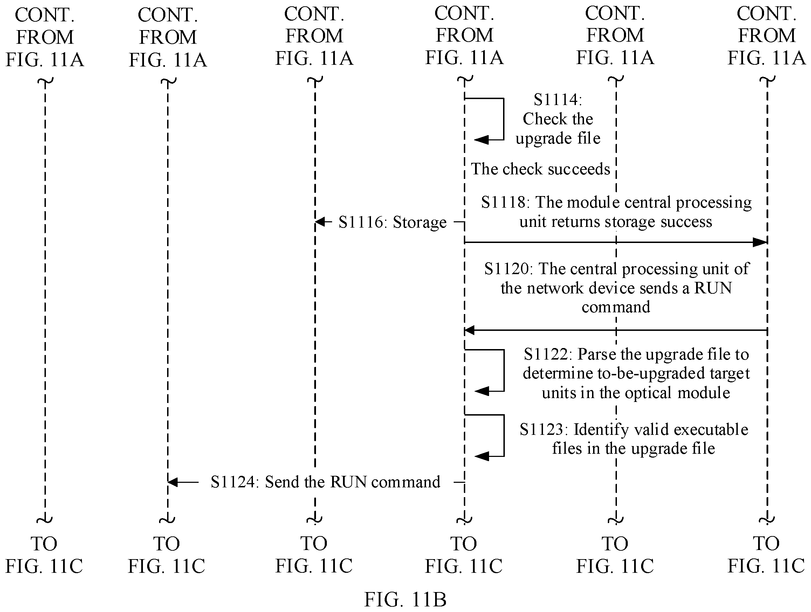

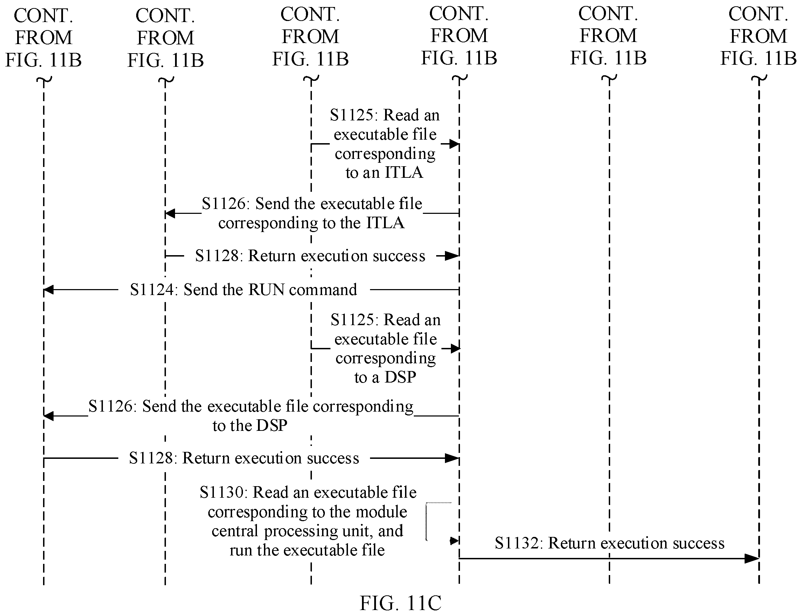

Refer to a flowchart of an optical module upgrade method shown in FIGS. 11A-11C. A procedure of performing combined upgrade on a plurality of units in an optical module is as follows.

S1102: Initialize a central processing unit of a network device, a memory of the network device, a module central processing unit, and a module memory.

S1104: The central processing unit of the network device sends a query request to the module central processing unit. S1106: The module central processing unit returns manufacturing information of the optical module to the central processing unit of the network device.

S1108: The central processing unit of the network device obtains identification information of an upgrade file from the memory of the network device.

S1110: The central processing unit of the network device compares the manufacturing information of the optical module with the identification information of the upgrade file. When the manufacturing information of the optical module successfully matches the identification information of the upgrade file, S1112 is performed.

S1112: The central processing unit of the network device sends the upgrade file.

S1114: The module central processing unit checks the upgrade file. When the check succeeds, S1116 is performed. For example, the module central processing unit may check a checksum of the upgrade file. In this embodiment, the module central processing unit may separately check a checksum (checksum) of each upgrade file, and check a checksum of a plurality of upgrade files as a whole.

S1116: The module central processing unit stores the upgrade file.

S1118: The module central processing unit returns storage success to the central processing unit of the network device.

S1120: The central processing unit of the network device sends a run command to the module central processing unit. In this embodiment, a plurality of processors in the optical module need to be upgraded, and the central processing unit of the network device may send a plurality of run commands to the module central processing unit, for example, send run commands corresponding to the plurality of to-be-upgraded processors. In this example, the run commands may include a run command corresponding to an ITLA processing unit, a run command corresponding to a DSP processing unit, and a run command corresponding to the module central processing unit.

Version information of the module may be determined based on version information of the ITLA processing unit and the DSP processing unit and version information of the module central processing unit (which are, specifically, version information of executable files currently deployed in the foregoing processors or processing units).

S1122: The module central processing unit parses the upgrade file to determine to-be-upgraded target units in the optical module. When the target units include the module central processing unit, a DSP, and an ITLA, S1123 is performed.

S1123: The module central processing unit identifies valid executable files in the upgrade file.

Specifically, the module central processing unit may identify, from the upgrade file, an executable file corresponding to the module central processing unit, an executable file corresponding to the DSP, and an executable file corresponding to the ITLA.

S1124: The central processing unit of the network device sends the run commands to the ITLA processing unit and the DSP processing unit.

S1125: The module central processing unit may read, from the module memory, the executable file corresponding to the ITLA and the executable file corresponding to the DSP.

S1126: The module central processing unit sends the executable files to the ITLA processing unit and the DSP processing unit respectively.

S1128: The ITLA processing unit and the DSP processing unit check the executable files, run the checked executable files based on the run commands after the check succeeds, and return running success to the module central processing unit after running succeeds.

S1130: The module central processing unit reads, from the module memory, the executable file corresponding to the module central processing unit, and runs the executable file.

S1132: After successfully running the executable file and receiving the execution success returned by the ITLA processing unit and the DSP processing unit, the module central processing unit returns execution success to the central processing unit of the network device.

Before the executable file corresponding to the module central processing unit is run and takes effect, the to-be-effective executable file may be checked (for example, checked by using an SHA256 algorithm) first, and then the central processing unit is reset, so that the executable file takes effect. For other executable files to be run and take effect, the central processing unit may first check the to-be-effective executable files, and then reload and reset other processors.

Based on this solution, the network device only needs to identify a configuration file in the upgrade file, and does not need to identify the executable files specifically included in the upgrade file. After the upgrade file is sent to the optical module, the optical module identifies version information of the upgrade file and performs upgrade based on the executable files of corresponding versions. An upgrade processing manner of the network device for an upgrade file including one executable file is the same as that of the network device for an upgrade file including a plurality of executable files.

In the embodiments shown in FIG. 8A to FIG. 11C, examples of upgrading one optical module are mainly described.

This application further supports upgrading a plurality of optical modules.

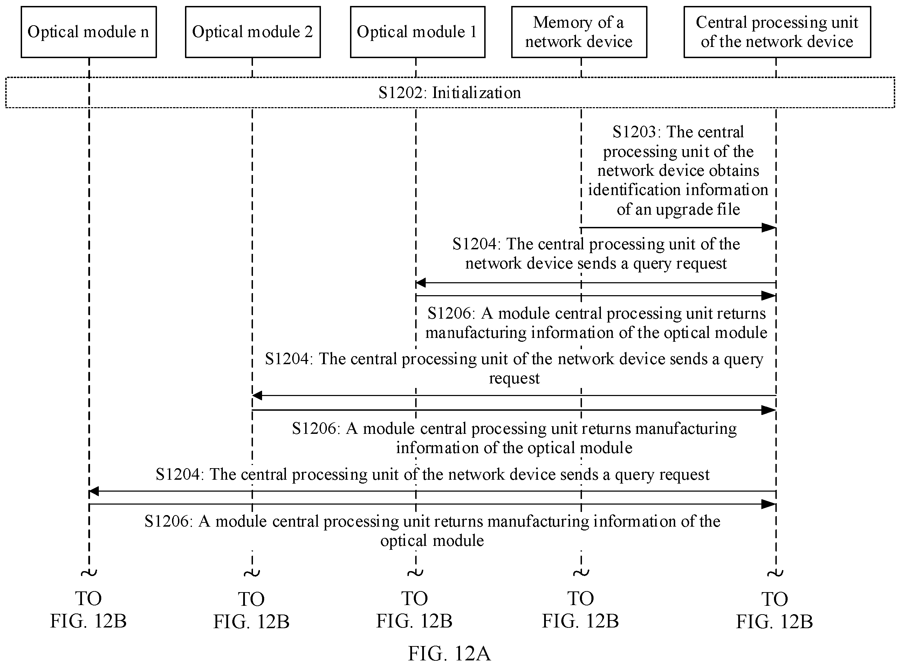

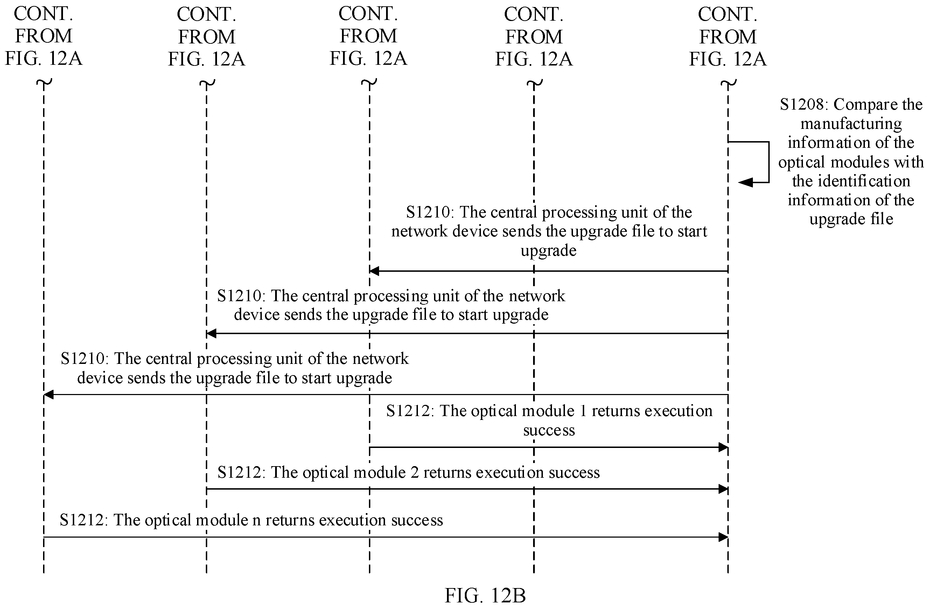

Refer to a flowchart of an optical module upgrade method shown in FIGS. 12A and 12B. A procedure of performing firmware upgrade on a plurality of modules is as follows.

S1202: Initialize a central processing unit of a network device, a memory of the network device, and the plurality of optical modules.

S1203: The central processing unit of the network device obtains identification information of an upgrade file from the memory of the network device.

S1204: The central processing unit of the network device sends query requests to the plurality of optical modules. S1206: The plurality of modules respectively return manufacturing information of the optical modules to the central processing unit of the network device.

S1208: The central processing unit of the network device compares the manufacturing information of the optical modules with the identification information of the upgrade file. When the manufacturing information of the optical modules successfully matches the identification information of the upgrade file, S1210 is performed.

S1210: The central processing unit of the network device separately sends, to the plurality of optical modules, the upgrade file that successfully matches the manufacturing information of the optical modules, to start upgrade.

The network device may send, to the plurality of optical modules based on a processing capability through a plurality of threads, the upgrade file that successfully matches the manufacturing information of the optical modules, to improve efficiency.

S1212: The plurality of optical modules separately return execution success to the central processing unit of the network device.

In this embodiment, based on the capability, the network device may perform operations of upgrade file identification, matching, and sending for the plurality of modules sequentially or concurrently. After the upgrade file is sent successfully, refer to the related content descriptions in the foregoing embodiments for a subsequent upgrade procedure. When the network device supports concurrency, upgrade file identification, upgrade file transmission, and upgrade procedures for the plurality of optical modules may be performed concurrently, to improve overall upgrade efficiency.

Based on the foregoing embodiments, this application further provides a version management solution for an executable file.

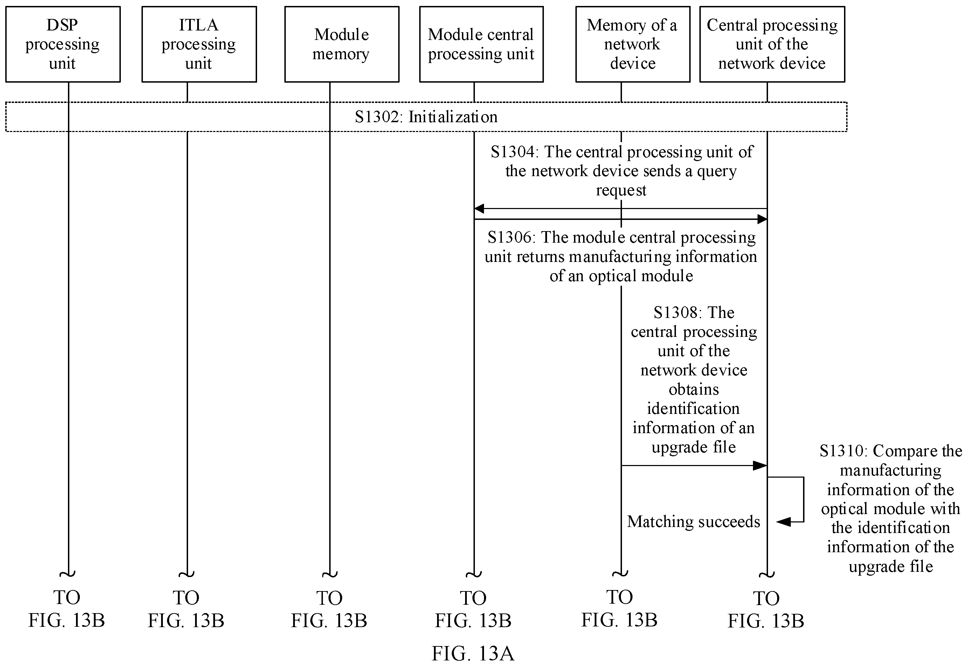

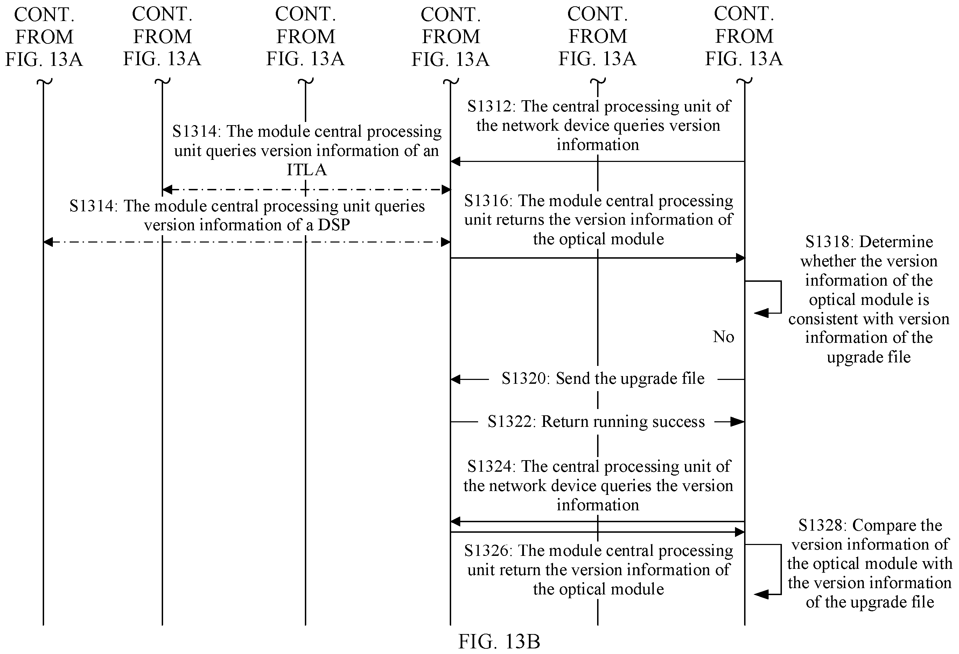

FIGS. 13A and 13B are a flowchart of an optical module upgrade method, which specifically includes the following steps.

S1302: Initialize a central processing unit of a network device, a memory of the network device, a module central processing unit, and a module memory.

S1304: The central processing unit of the network device sends a query request to the module central processing unit.

S1306: The module central processing unit returns manufacturing information of an optical module to the central processing unit of the network device.

S1308: The central processing unit of the network device obtains identification information of an upgrade file from the memory of the network device.

S1310: The central processing unit of the network device compares the manufacturing information of the module with the identification information of the upgrade file. When the manufacturing information of the optical module successfully matches the identification information of the upgrade file, S1312 is performed.

S1312: The central processing unit of the network device queries version information from the module central processing unit.

S1314: The module central processing unit queries version information of an ITLA processing unit and a DSP processing unit.

S1316: The module central processing unit returns the version information of the optical module based on the version information of the ITLA processing unit and the DSP processing unit.

The version information of the module may be determined based on the version information of the ITLA processing unit and the DSP processing unit and version information of the module central processing unit (which are, specifically, version information of executable files currently deployed in the foregoing processors or processing units).

S1318: The central processing unit of the network device compares the version information of the optical module with version information of the upgrade file. When versions are inconsistent, S1320 is performed.

S1320: The central processing unit of the network device sends the upgrade file to start upgrade.

S1322: The module central processing unit returns running success to the central processing unit of the network device. When running the upgrade file and receiving running success returned by the ITLA processing unit and the DSP processing unit, the module central processing unit may return the execution success to the central processing unit of the network device. It should be noted that, for specific implementation of an embodiment in which the ITLA processing unit, the DSP processing unit, and the module central processing unit run the executable files to perform upgrade, refer to the foregoing embodiments. Details are not described herein again.

S1324: The central processing unit of the network device may query the version information from the module central processing unit.

S1326: The module central processing unit may return the version information of the optical module.

S1328: The central processing unit of the network device compares the version information of the optical module with the version information of the upgrade file.

It should be noted that S1324 to S1328 are used to verify whether the upgrade succeeds. When the version information is consistent, it indicates that the upgrade succeeds. The optical module upgrade method in this embodiment may alternatively be performed without performing S1324 to S1328.

The version information of the optical module may be stored and managed by the central processing unit of the network device, or may be stored and managed by the processing unit of the optical module. This is not limited in embodiments.

Based on the foregoing optical module upgrade method, this application further provides an optical module upgrade apparatus. The optical module upgrade apparatus may be a virtual apparatus. The following describes, from a perspective of function modularization, the optical module upgrade apparatus provided in this application.

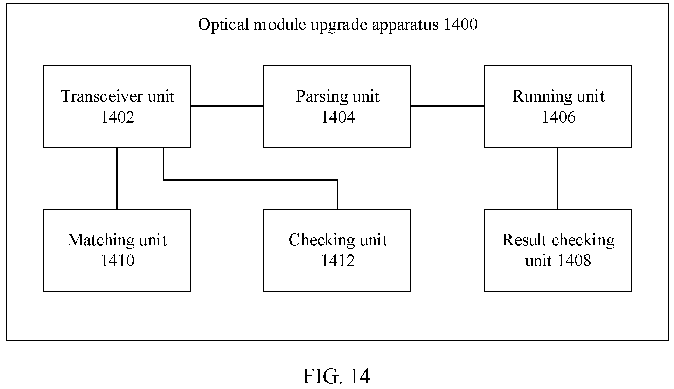

Refer to a diagram of a structure of an optical module upgrade apparatus shown in FIG. 14. The apparatus 1400 is configured to upgrade an optical module. The optical module includes a module central processing unit and at least one functional unit supporting upgrade. The apparatus 1400 includes:
a transceiver unit 1402, configured to receive an upgrade file, where the upgrade file includes at least one executable file and version information of the upgrade file, and the version information of the upgrade file is determined based on version information of the at least one executable file in the upgrade file;
a parsing unit 1404, configured to: parse the upgrade file, and determine a to-be-upgraded target unit in the optical module, where the target unit includes at least one of the module central processing unit and the functional unit; and
a running unit 1406, configured to: when the target unit includes the module central processing unit, run an executable file that is in the at least one executable file and that corresponds to the module central processing unit. The transceiver unit 1402 is further configured to: when the target unit includes the functional unit, send, to the target unit, an executable file that is in the at least one executable file and that corresponds to the target unit.

For specific implementation of the transceiver unit 1402, refer to related content descriptions of S402 in the embodiment shown in FIG. 4. For specific implementation of the parsing unit 1404, refer to related content descriptions of S404 in the embodiment shown in FIG. 4. For specific implementation of the running unit 1406, refer to related content descriptions of S406 in the embodiment shown in FIG. 4. For specific implementation of the transceiver unit 1402, further refer to related content descriptions of S408 in the embodiment shown in FIG. 4.

In some possible implementations, the functional unit includes at least one of a digital signal processor, a light source, a serial circuit, a digital-to-analog converter, or an analog-to-digital converter.

In some possible implementations, the upgrade file includes a file header, and the file header includes the version information of the upgrade file.

In some possible implementations, the file header further includes the version information of the at least one executable file.

The apparatus 1400 further includes:
a result checking unit 1408, configured to: query version information of the target unit that completes upgrade, and compare the version information of the target unit that completes upgrade with version information that is of the executable file corresponding to the target unit and that is in the file header, to obtain an upgrade result.

In some possible implementations, the upgrade file includes a configuration file, and the configuration file includes the version information of the upgrade file.

In some possible implementations, the configuration file further includes an identifier and an upgrade sequence of the at least one executable file in the upgrade file.

In some possible implementations, the upgrade file further includes identification information, and the identification information indicates an optical module to which the upgrade file is adapted.

The transceiver unit 1402 is further configured to:
send manufacturing information of the optical module to a network device.

The transceiver unit 1402 is specifically configured to:
receive the upgrade file that is obtained by the network device based on the manufacturing information of the optical module and the identification information and that successfully matches the optical module.

In some possible implementations, the upgrade file further includes identification information, and the identification information indicates an optical module to which the upgrade file is adapted.

The transceiver unit 1402 is further configured to receive the identification information that is of the upgrade file and that is sent by a network device.

The apparatus 1400 further includes:
a matching unit 1410, configured to: match manufacturing information of the optical module with the identification information of the upgrade file, and return a matching result to the network device.

The transceiver unit 1402 is specifically configured to:
receive the upgrade file that is sent by the network device and that successfully matches the optical module.

In some possible implementations, the manufacturing information includes at least one of a manufacturer name, an organizationally unique identifier OUI, a serial number SN, a part number PN, or a module custom identifier.

In some possible implementations, the apparatus 1400 further includes:
a checking unit 1412, configured to perform data packet-level check, file-level integrity check, and/or overall integrity check on the upgrade file to obtain a check result.

The running unit 1406 is configured to: when the check result indicates that the check succeeds, perform the step of running the executable file that is in the at least one executable file and that corresponds to the module central processing unit.

The transceiver unit 1402 is configured to: when the check result indicates that the check succeeds, perform the step of sending, to the target unit, the executable file that is in the at least one executable file and that corresponds to the target unit.

In this embodiment, for specific implementation of each unit, refer to a specific implementation process on the optical module side in the foregoing method embodiments, and details are not described herein again.

This application further provides an optical module. The apparatus shown in FIG. 14 may be deployed in the optical module, and the optical module executes program code of the apparatus shown in FIG. 14, to perform the optical module upgrade method in the foregoing embodiments. As shown in FIG. 2 or the figure, the optical module includes a module central processing unit and at least one functional unit supporting upgrade. The functional unit may include but is not limited to a digital signal processor, a light source (such as an ITLA), a serial circuit, a digital-to-analog converter, or an analog-to-digital converter. The module central processing unit is configured to execute the program code, to perform the optical module upgrade method in the foregoing embodiments, to implement upgrade of the module central processing unit and/or the functional unit in the optical module.

An embodiment of this application further provides a computer-readable storage medium. The computer-readable storage medium may be any usable medium that can be stored by a compute device, or a data storage device, such as a data center, including one or more usable media. The usable medium may be a magnetic medium (for example, a floppy disk, a hard disk, or a magnetic tape), an optical medium (for example, a DVD), a semiconductor medium (for example, a solid-state drive), or the like. The computer-readable storage medium includes instructions, and the instructions instruct to perform the optical module upgrade method in the foregoing embodiments.

An embodiment of this application further provides a computer program product including instructions. The computer program product may be software or a program product that includes instructions and that can be run on a compute device or stored in any usable medium. When the computer program product is run on an optical module, the optical module is enabled to perform the optical module upgrade method in the foregoing embodiments.

Finally, it should be noted that the foregoing embodiments are merely intended for describing the technical solutions of the present invention, but not for limiting the present invention. Although the present invention is described in detail with reference to the foregoing embodiments, persons of ordinary skill in the art should understand that they may still make modifications to the technical solutions described in the foregoing embodiments or make equivalent replacements to some technical features thereof, without departing from the scope of the technical solutions of embodiments of the present invention.

## Claims

1. An optical module upgrade method, applied to an optical module, wherein the optical module comprises a module central processing unit and at least one functional unit supporting upgrade, and the method comprises:
receiving, by the module central processing unit, an upgrade file, wherein the upgrade file comprises at least one executable file and version information of the upgrade file, and the version information of the upgrade file is determined based on version information of the at least one executable file in the upgrade file;
parsing, by the module central processing unit, the upgrade file, and determining a to-be-upgraded target unit in the optical module, wherein the target unit comprises at least one of the module central processing unit and the functional unit; and
when the target unit comprises the module central processing unit, running, by the module central processing unit, an executable file that is in the at least one executable file and that corresponds to the module central processing unit; and when the target unit comprises the functional unit, sending, by the module central processing unit to the target unit, an executable file that is in the at least one executable file and that corresponds to the target unit.

2. The method according to claim 1, wherein the functional unit comprises at least one of a digital signal processor, a light source, a serial circuit, a digital-to-analog converter, or an analog-to-digital converter.

3. The method according to claim 1 or 2, wherein the upgrade file comprises a file header, and the file header comprises the version information of the upgrade file.

4. The method according to claim 3, wherein the file header further comprises the version information of the at least one executable file; and
the method further comprises:
querying, by the module central processing unit, version information of the target unit that completes upgrade; and
comparing, by the module central processing unit, the version information of the target unit that completes upgrade with version information that is of the executable file corresponding to the target unit and that is in the file header, to obtain an upgrade result.

5. The method according to claim 1 or 2, wherein the upgrade file comprises a configuration file, and the configuration file comprises the version information of the upgrade file.

6. The method according to claim 5, wherein the configuration file further comprises an identifier and an upgrade sequence of the at least one executable file in the upgrade file.

7. The method according to any one of claims 1 to 6, wherein the upgrade file further comprises identification information, and the identification information indicates an optical module to which the upgrade file is adapted;
the method further comprises:
sending, by the module central processing unit, manufacturing information of the optical module to a network device; and
receiving, by the module central processing unit, the upgrade file comprises:
receiving, by the module central processing unit, the upgrade file that is obtained by the network device based on the manufacturing information of the optical module and the identification information and that successfully matches the optical module.

8. The method according to any one of claims 1 to 6, wherein the upgrade file further comprises identification information, and the identification information indicates an optical module to which the upgrade file is adapted;
the method further comprises:
receiving, by the module central processing unit, the identification information that is of the upgrade file and that is sent by a network device; and
matching, by the module central processing unit, manufacturing information of the optical module with the identification information of the upgrade file, and returning a matching result to the network device; and
receiving, by the module central processing unit, the upgrade file comprises:
receiving, by the module central processing unit, the upgrade file that is sent by the network device and that successfully matches the optical module.

9. The method according to claim 7 or 8, wherein the manufacturing information comprises at least one of a manufacturer name, an organizationally unique identifier OUI, a serial number SN, a part number PN, or a module custom identifier.

10. The method according to any one of claims 1 to 9, wherein the method further comprises:
performing, by the module central processing unit, data packet-level check, file-level integrity check, and/or overall integrity check on the upgrade file to obtain a check result; and
when the check result indicates that the check succeeds, performing, by the module central processing unit, the step of running the executable file that is in the at least one executable file and that corresponds to the module central processing unit, and/or performing the step of sending, to the target unit, the executable file that is in the at least one executable file and that corresponds to the target unit.

11. An optical module upgrade apparatus, wherein the apparatus is configured to upgrade an optical module, the optical module comprises a module central processing unit and at least one functional unit supporting upgrade, and the apparatus comprises:
a transceiver unit, configured to receive an upgrade file, wherein the upgrade file comprises at least one executable file and version information of the upgrade file, and the version information of the upgrade file is determined based on version information of the at least one executable file in the upgrade file;
a parsing unit, configured to: parse the upgrade file, and determine a to-be-upgraded target unit in the optical module, wherein the target unit comprises at least one of the module central processing unit and the functional unit; and
a running unit, configured to: when the target unit comprises the module central processing unit, run an executable file that is in the at least one executable file and that corresponds to the module central processing unit, wherein
the transceiver unit is further configured to: when the target unit comprises the functional unit, send, to the target unit, an executable file that is in the at least one executable file and that corresponds to the target unit.

12. The apparatus according to claim 11, wherein the functional unit comprises at least one of a digital signal processor, a light source, a serial circuit, a digital-to-analog converter, or an analog-to-digital converter.

13. The apparatus according to claim 11 or 12, wherein the upgrade file comprises a file header, and the file header comprises the version information of the upgrade file.

14. The apparatus according to claim 13, wherein the file header further comprises the version information of the at least one executable file; and
the apparatus further comprises:
a result checking unit, configured to: query version information of the target unit that completes upgrade, and compare the version information of the target unit that completes upgrade with version information that is of the executable file corresponding to the target unit and that is in the file header, to obtain an upgrade result.

15. The apparatus according to claim 11 or 12, wherein the upgrade file comprises a configuration file, and the configuration file comprises the version information of the upgrade file.

16. The apparatus according to claim 15, wherein the configuration file further comprises an identifier and an upgrade sequence of the at least one executable file in the upgrade file.

17. The apparatus according to any one of claims 11 to 16, wherein the upgrade file further comprises identification information, and the identification information indicates an optical module to which the upgrade file is adapted;
the transceiver unit is further configured to:
send manufacturing information of the optical module to a network device; and
the transceiver unit is specifically configured to:
receive the upgrade file that is obtained by the network device based on the manufacturing information of the optical module and the identification information and that successfully matches the optical module.

18. The apparatus according to any one of claims 11 to 16, wherein the upgrade file further comprises identification information, and the identification information indicates an optical module to which the upgrade file is adapted;
the transceiver unit is further configured to receive the identification information that is of the upgrade file and that is sent by a network device;
the apparatus further comprises:
a matching unit, configured to: match manufacturing information of the optical module with the identification information of the upgrade file, and return a matching result to the network device; and
the transceiver unit is specifically configured to:
receive the upgrade file that is sent by the network device and that successfully matches the optical module.

19. The apparatus according to claim 17 or 18, wherein the manufacturing information comprises at least one of a manufacturer name, an organizationally unique identifier OUI, a serial number SN, a part number PN, or a module custom identifier.

20. The apparatus according to any one of claims 11 to 19, wherein the apparatus further comprises:
a checking unit, configured to perform data packet-level check, file-level integrity check, and/or overall integrity check on the upgrade file to obtain a check result, wherein
the running unit is configured to: when the check result indicates that the check succeeds, perform the step of running the executable file that is in the at least one executable file and that corresponds to the module central processing unit; and
the transceiver unit is configured to: when the check result indicates that the check succeeds, perform the step of sending, to the target unit, the executable file that is in the at least one executable file and that corresponds to the target unit.

21. An optical module, wherein the optical module comprises a module central processing unit and at least one functional unit supporting upgrade, and the module central processing unit is configured to perform the method according to any one of claims 1 to 10.

22. A computer-readable storage medium, comprising computer-readable instructions, wherein the computer-readable instructions are used to implement the method according to any one of claims 1 to 10.

23. A computer program product, comprising computer-readable instructions, wherein the computer-readable instructions are used to implement the method according to any one of claims 1 to 10.
